(19) **Europäisches Patentamt**
**European Patent Office**
**Office européen des brevets**

(11) **EP 3 862 870 A1**

(12) **EUROPEAN PATENT APPLICATION**

(43) Date of publication:
**11.08.2021 Bulletin 2021/32**

(51) Int Cl.:
**G06F 7/38** (2006.01)　　　**G06F 7/544** (2006.01)

(21) Application number: **20217962.8**

(22) Date of filing: **31.12.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.02.2020 JP 2020020502**

(71) Applicant: **FUJITSU LIMITED**
**Kanagawa 211-8588 (JP)**

(72) Inventor: **Jippo, Hideyuki**
**Kanagawa 211-8588 (JP)**

(74) Representative: **Hoffmann Eitle**
**Patent- und Rechtsanwälte PartmbB**
**Arabellastraße 30**
**81925 München (DE)**

(54) **OPTIMIZATION DEVICE, OPTIMIZATION PROGRAM, AND OPTIMIZATION METHOD**

(57)　　An optimization device includes a solution unit. The solution unit configured to, among a plurality of bits for solving a plurality of combinatorial optimization problems, assign a plurality of first bits to a first combinatorial optimization problem included in the plurality of combinatorial optimization problems and assign a plurality of second bits to a second combinatorial optimization problem included in the plurality of combinatorial optimization problems. The solution unit further configured to set an interaction between each of the plurality of first bits and each of the plurality of second bits to zero, and to solve the plurality of combinatorial optimization problems.

FIG. 7

**Description**

[Field]

The embodiments discussed herein are related to an optimization device, an optimization program, and an optimization method.

[Background Art]

A problem of finding an optimum combination from a huge number of combinations in consideration of various conditions and restrictions is called combinatorial optimization problem. In recent years, attempts to obtain optimum answers, applying combinatorial optimization problems for solving problems, have been made in various fields in the real world.

Examples of possible combinatorial optimization problems include molecular similarity search in drug discovery, portfolio optimization in finance, personalized advertising optimization in digital marketing, warehouse component placement optimization in factories and logistics, and the like.

However, in the combinatorial optimization problems, the number of combinations of factors exponentially increases as the number of factors to be considered increases, so it is difficult to timely solve practical problems in the real world by the conventional calculation methods that sequentially perform processing.

Therefore, as a technology capable of solving a combinatorial optimization problem at a high speed, a technology of performing calculation by an annealing method using an annealing machine or the like has been proposed (see Patent Document 1, for example).

Here, in such a conventional technology, in a case of solving a plurality of combinatorial optimization problems, each combinatorial optimization problem is calculated separately (calculated as a separate job), so that each combinatorial optimization problem is individually solved. For this reason, the conventional technology has a problem that the combinatorial optimization problems to be solved need to be individually and repeatedly solved, and calculation time needed for solving the plurality of combinatorial optimization problems becomes long.

[Citation List]

[Patent Literature]

[PTL 1] Japanese Laid-open Patent Publication No. 2019-121137 is disclosed as related art.

[Summary]

[Problem]

In one aspect, an object of the present case is to provide an optimization device, an optimization program, and an optimization method capable of efficiently solving a plurality of combinatorial optimization problems in a short time without individually repeating solving the problems.

[Solution to Problem]

In one embodiment, an optimization device includes a solution unit, the solution unit configured to, among a plurality of bits for solving a plurality of combinatorial optimization problems, assign a plurality of first bits to a first combinatorial optimization problem included in the plurality of combinatorial optimization problems and assign a plurality of second bits to a second combinatorial optimization problem included in the plurality of combinatorial optimization problems, set an interaction between each of the plurality of first bits and each of the plurality of second bits to zero, and solve the plurality of combinatorial optimization problems.

Further, in one embodiment, an optimization program that executed by an optimization device, the optimization program includes,among a plurality of bits for solving a plurality of combinatorial optimization problems, assigning a plurality of first bits to a first combinatorial optimization problem included in the plurality of combinatorial optimization problems and assigning a plurality of second bits to a second combinatorial optimization problem included in the plurality of combinatorial optimization problems, setting an interaction between each of the plurality of first bits and each of the plurality of second bits to zero, and solving the plurality of combinatorial optimization problems.

Further, in one embodiment, an optimization method includes among a plurality of bits for solving a plurality of combinatorial optimization problems, assigning a plurality of first bits to a first combinatorial optimization problem included in the plurality of combinatorial optimization problems and assigning a plurality of second bits to a second combinatorial optimization problem included in the plurality of combinatorial optimization problems, setting an interaction between each of the plurality of first bits and each of the plurality of second bits to zero, and solving the plurality of combinatorial optimization problems.

[Effect]

In one aspect, the present case can provide an optimization device, an optimization program, and an optimization method capable of efficiently solving a plurality of combinatorial optimization problems in a short time without individually repeating solving the problems.

[Brief Description of Drawings]

FIG. 1 is a diagram illustrating an example of a state of a case of searching for a molecule having a similar structure to a query molecule by solving a combinatorial optimization problem;
FIG. 2 is a diagram illustrating an example of a mode of solving three combinatorial optimization problems by minimizing Ising model equations respectively corresponding to the combinatorial optimization problems using an annealing machine in an example of a conventional technology;
FIG. 3 is a diagram illustrating an example of a mode of solving three combinatorial optimization problems by minimizing Ising model equations respectively corresponding to the combinatorial optimization problems using an annealing machine in an example of a technology disclosed in the present case;
FIG. 4 is a diagram illustrating an example of a method for assigning bits to be used for solving individual combinatorial optimization problems in the plurality of combinatorial optimization problems in an example of the technology disclosed in the present case;
FIG. 5 is a diagram illustrating another example of the method for assigning bits to be used for solving individual combinatorial optimization problems in the plurality of combinatorial optimization problems in an example of the technology disclosed in the present case;
FIG. 6 is a diagram illustrating another example of the method for assigning bits to be used for solving individual combinatorial optimization problems in the plurality of combinatorial optimization problems in an example of the technology disclosed in the present case;
FIG. 7 is a diagram illustrating a configuration example of an optimization device disclosed in the present case;
FIG. 8 is a diagram illustrating another configuration example of the optimization device disclosed in the present case;
FIG. 9 is a diagram illustrating another configuration example of the optimization device disclosed in the present case;
FIG. 10 is a diagram illustrating a functional configuration example as an embodiment of the optimization device disclosed in the present case;
FIG. 11 is an example of a flowchart for solving a plurality of combinatorial optimization problems using an example of the technology disclosed in the present case;
FIG. 12 is a diagram illustrating an example of a functional configuration of an annealing machine used in an annealing method;
FIG. 13 is a block diagram illustrating an example of a circuit level of a transition control unit;
FIG. 14 is a diagram illustrating an example of an operation flow of the transition control unit;
FIG. 15 is a diagram illustrating an example of bias in problem (A1) in Embodiment 1;
FIG. 16 is a diagram illustrating an example of bias in problem (A2) in Embodiment 1;
FIG. 17 is a diagram illustrating an example of the bias to be used for solving the problem (A1) and the problem (A2) in Embodiment 1;
FIG. 18 is a diagram illustrating an example of weight in the problem (A1) in Embodiment 1;
FIG. 19A is a diagram illustrating an example of weight in the problem (A2) in Embodiment 1;
FIG. 19B is a diagram illustrating an example of weight in the problem (A2) in Embodiment 1;
FIG. 20A is a diagram illustrating an example of the weight to be used for solving the problem (A1) and the problem (A2) in Embodiment 1;
FIG. 20B is a diagram illustrating an example of the weight to be used for solving the problem (A1) and the problem (A2) in Embodiment 1;
FIG. 21 is a diagram illustrating the conditions and results of Embodiment 1 and Comparative Example 1;
FIG. 22 is a diagram illustrating an example of a state of making graphs for acetic acid and methyl acetate;
FIG. 23 is a diagram illustrating examples of combinations in a case of combining the same elements in molecules A and B and making nodes of a conflict graph;

FIG. 24 is a diagram illustrating an example of a rule for creating an edge in the conflict graph;

FIG. 25 is a diagram illustrating an example of the conflict graph of the molecules A and B;

FIG. 26 is a diagram illustrating an example of a maximum independent set in the graph;

FIG. 27 is a diagram illustrating an example of a flow in a case of finding a maximum common substructure between the molecule A and the molecule B by finding a maximum independent set of the conflict graph (by solving a maximum independent set problem);

FIG. 28 is an explanatory diagram for describing an example of a technique of searching for a maximum independent set in a graph of which the number of nodes is six;

FIG. 29 is an explanatory diagram for describing an example of a technique of searching for a maximum independent set in a graph of which the number of nodes is six;

FIG. 30 is a diagram illustrating an example of a maximum independent set in a conflict graph;

FIG. 31 is a diagram illustrating an example of a bias and weight arranging method set in Embodiment 2;

FIG. 32 is a diagram illustrating an example of a bias and weight arranging method set in Comparative Example 2;

FIG. 33 is a diagram illustrating conditions and results of Embodiment 2 and Comparative Example 2;

FIG. 34 is an example illustrating an example of a bit state when obtaining information of the bit state as a result of solving individual combinatorial optimization problems by solving the plurality of combinatorial optimization problems in Embodiment 2;

FIG. 35 is a diagram illustrating an example of a bias and weight arranging method set in Embodiment 3;

FIG. 36 is a diagram illustrating an example of a bias and weight arranging method set in Comparative Example 3;

FIG. 37 is a diagram illustrating conditions and results of Embodiment 3 and Comparative Example 3;

FIG. 38 is a diagram illustrating an example of a bias and weight arranging method set in Embodiment 4;

FIG. 39 is a diagram illustrating an example of a bias and weight arranging method set in Comparative Example 4;

FIG. 40 is a diagram illustrating conditions and results of Embodiment 4 and Comparative Example 4; and

FIG. 41 is a diagram illustrating an example of a relationship when solving a plurality of combinatorial optimization problems in one embodiment of the technology disclosed in the present case and a conventional technology.

[Description of embodiments]

(Optimization Device)

An optimization device disclosed in the present case can be a device that optimizes a plurality of combinations in one aspect. The optimization device disclosed in the present case is provided with a solution unit, and further includes other units (means) as needed.

First, a method for solving a combinatorial optimization problem in a conventional technology will be described before describing details of the technology disclosed in the present case.

An example of the method for solving a combinatorial optimization problem includes a method using a "cost function" that is a function based on conditions and restrictions in the combinatorial optimization problem. Note that the cost function may also be referred to as an objective function, an energy function, a Hamiltonian, or the like.

The cost function is a function that takes a minimum value when a combination of variables (parameters) in the cost function become an optimum combination in the combinatorial optimization problem. Therefore, a solution of the combinatorial optimization problem can be searched by searching for the combination of variables by which the cost function takes the minimum value.

Here, an example of the method for searching for the combination of variables by which the cost function takes the minimum value includes a method for solving the combinatorial optimization problem by converting the cost function into a format called Ising model and minimizing the value of the cost function converted into the Ising model.

The minimization of the cost function converted into the Ising model equation can be executed in a short time by performing an annealing method (annealing) using an annealing machine or the like, for example. Here, the annealing method is a method likened to converging a crystal structure of a material to an optimum state by heating the material to a high temperature and then gradually cooling the material. In the annealing method, a parameter corresponding to the temperature in the material is gradually lowered from a high state, so that a search range of the solution is gradually narrowed from a wide range, and the state with the lowest energy can be searched.

Furthermore, the annealing machine means an annealing type computer that performs a ground state search for the cost function represented by the Ising model. The annealing machine can perform the minimization of the cost function converted in the Ising model equation (search for the minimum value of the cost function) in a shorter time than a conventional Neumann computer, and thus can solve the combinatorial optimization problem in a short time.

As the cost function converted into the Ising model, the following mathematical Equation (1) can be used, for example. Note that the mathematical Equation (1) below is an Ising model in the quadratic unconstrained binary optimization (QUBO) format.

[Equation 1]

$$E = - \sum_{i,j=0} w_{ij} x_i x_j - \sum_{i=0} b_i x_i$$

... Equation (1)

Note that, in the above Equation (1), E represents the cost function that means minimization solves the combinatorial optimization problem.

$w_{ij}$ is a coefficient for weighting the i-th element (bit) and the j-th element (bit).

$x_i$ is a binary variable representing that the i-th element (bit) is 0 or 1, and $x_j$ is a binary variable representing that the j-th element (bit) is 0 or 1.

bi is a numerical value representing a bias for the i-th element (bit).

Here, when minimizing the cost function of the Ising model of the above Equation (1) (Ising model equation) by the annealing method using the annealing machine, a corresponding bit is assigned to each "$x_i$" in the Ising model Equation (1). Furthermore, when solving a combinatorial optimization problem by minimizing the Ising model equation, the annealing machine needs to assign a larger number of bits as the scale of the combinatorial optimization problem (the number of combinations) is larger.

"$b_i$" in the above Ising model Equation (1) is a term of bias for each bit, and is a set of numerical values having the same number as the bit used for calculation. Furthermore, "$w_{ij}$" in the above Ising model Equation (1) is a coefficient (weight) for weighting bits, which means the magnitude of interaction between bits, and is a set of numerical values having the same number as the combination of bits (the square of the number of bits) used for calculation.

As described above, when minimizing the above Ising model Equation (1) using an annealing machine, the minimum value of the Ising model equation is searched based on the bias and weight, using the number of bits (0 or 1) assigned according to the scale of the combinatorial optimization problem. Therefore, in the conventional technology, when minimizing the above Ising model Equation (1) using the annealing machine, the bias and weight are set for each combinatorial optimization problem to be solved and calculation by the annealing method is executed.

Here, when applying the combinatorial optimization problem to a problem of the real world, solving a large number of combinatorial optimization problems is sometimes needed.

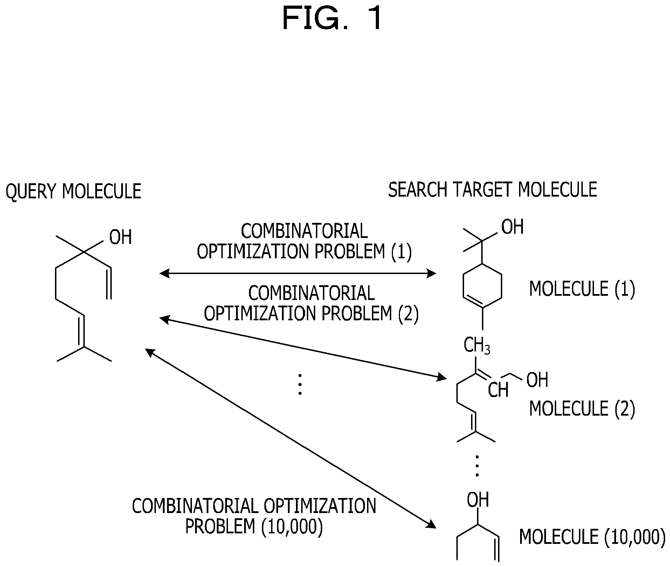

For example, in a case of finding similarity between molecules by solving a combinatorial optimization problem in drug discovery or the like, there are some cases where the similarity of various molecules with respect to one reference molecule (query molecule) needs to be obtained. As illustrated in FIG. 1, for example, when searching for a molecule having a similar structure to a query molecule having a known effect as a drug, the similarity needs to be obtained for each of the query molecule, and a search target molecule for which the similarity to the query molecule is obtained. At this time, for example, in a case of searching for a search target molecule similar to the query molecule from a database in which 10,000 molecules are recorded, a huge number such as 10,000 of combinatorial optimization problems needs to be solved to obtain the similarity of each search target molecule.

In the case of solving a plurality of combinatorial optimization problems in the conventional technology, as described above, each of the combinatorial optimization problems are separately calculated (calculated as separate jobs), so that each of the combinatorial optimization problems are individually solved. Namely, in the case of solving a plurality of combinatorial optimization problems in the conventional technology, first, the first combinatorial optimization problem is solved, and then the second combinatorial optimization problem is solved after the first combinatorial optimization problem is completed. Therefore, in the conventional technology, the combinatorial optimization problems are sequentially solved one after another in the case of solving the plurality of combinatorial optimization problems, and thus there is a problem that the calculation time needed for solving the combinatorial optimization problems becomes long according to the number of combinatorial optimization problems to be solved.

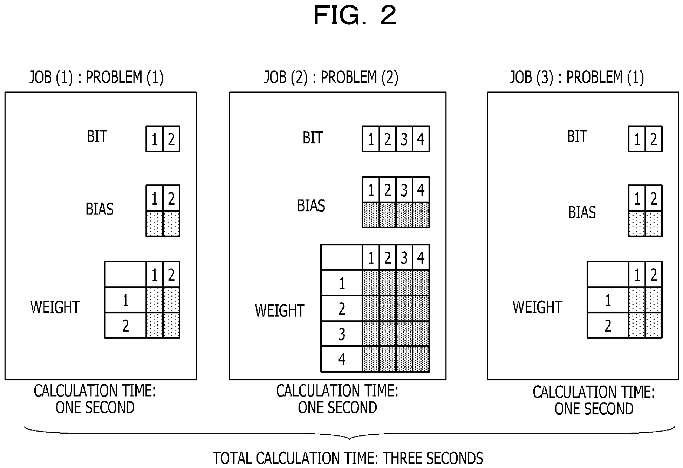

As an example of the conventional technology, consider a case of solving three combinatorial optimization problems by minimizing Ising model equations respectively corresponding to the combinatorial optimization problems using an annealing machine, as in FIG. 2. In the example in FIG. 2, a job (1) for solving a problem (1) is a combinatorial optimization problem using two bits (2 bits), the bias is a set of two numerical values, and the weight is a set of four numerical values. A job (2) for solving a problem (2) is a combinatorial optimization problem using four bits, the bias is a set of four numerical values, and the weight is a set of sixteen numerical values. A job (3) for solving a problem (3) is a combinatorial optimization problem using two bits, the bias is a set of two numerical values, and the weight is a set of four numerical values, similar to the problem (1).

Furthermore, in the example in FIG. 2, the calculation time needed for solving each of the problems (1), (2), and (3) is one second each.

In the example in FIG. 2, the problem (1) is first solved, the problem (2) is solved after the problem (1) is completed, and the problem (3) is then solved after the problem (2) is completed. Therefore, in the example illustrated in FIG. 2, the calculation time needed for solving the problems (1), (2), and (3) is three seconds at the shortest.

In the example illustrated in FIG. 2, the calculation time needed for solving a plurality of combinatorial optimization problems increases in proportion to the number of combinatorial optimization problems to be solved. Therefore, in the conventional technology, for example, in a case of solving N combinatorial optimization problems each taking one second to solve, a total of N seconds is needed for the calculation time at the shortest.

As described above, in the conventional technology, the combinatorial optimization problems have needed to be individually and repeatedly solved according to the number of combinatorial optimization problems to be solved, the calculation time needed for solving the problems becomes long, and the plurality of combinatorial optimization problems has not been able to be efficiently solved in a short time.

Therefore, the present inventor has earnestly studied an optimization device and the like capable of efficiently solving a plurality of combinatorial optimization problems in a short time without individually repeating solving the problems and has obtained the following findings. That is, the present inventor has found that a plurality of combinatorial optimization problems can be solved in a short time without individually repeating solving the problems by an optimization device including a solution unit configured to assign a plurality of first bits to a first combinatorial optimization problem included in a plurality of combinatorial optimization problems and assign a plurality of second bits to a second combinatorial optimization problem included in the plurality of combinatorial optimization problems, among a plurality of bits for solving the plurality of combinatorial optimization problems, set an interaction between each of the plurality of first bits and each of the plurality of second bits to zero, and solve the plurality of combinatorial optimization problems, or the like. The technology disclosed in the present case is based on this finding.

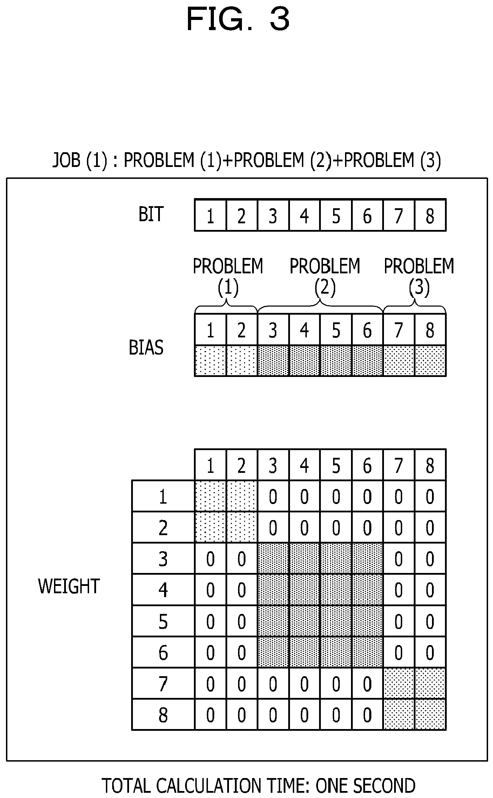

Here, an example of the technology disclosed in the present case will be described with reference to FIG. 3.

In the example illustrated in FIG. 3, consider a case of solving three combinatorial optimization problems using an annealing machine, similarly to the example illustrated in FIG. 2. In the example illustrated in FIG. 3, a problem (1) is a problem using two bits, a problem (2) is a problem using four bits, and a problem (3) is a problem using two bits, similarly to the example illustrated in FIG. 2.

In the example of the technology disclosed in the present case, first, bits for solving these three combinatorial optimization problems are prepared. The number of bits to be prepared (for example, the number of bits of the annealing machine) is equal to or larger than the total number of bits needed for solving each of the combinatorial optimization problems.

In the example illustrated in FIG. 3, the first and second bits of the prepared bits are used as the bits for solving the problem (1), and the third to sixth bits are used as the bits for solving the problem (2), and the seventh and eighth bits are used as the bits for solving the problem (3). As described above, in the example of the technology disclosed in the present case, bits to be used for solving individual combinatorial optimization problems in the plurality of combinatorial optimization problems are assigned in the prepared bits. Namely, in the example of the technology disclosed in the present case, a plurality of first bits, among a plurality of bits for solving the plurality of combinatorial optimization problems, is assigned to a first combinatorial optimization problem included in the plurality of combinatorial optimization problems. Moreover, in the example of the technology disclosed in the present case, a plurality of second bits, among the plurality of bits for solving the plurality of combinatorial optimization problems, is assigned to a second combinatorial optimization problem included in the plurality of combinatorial optimization problems.

Then, in the example of the technology disclosed in the present case, a bias value corresponding to "$b_i$" in the Ising model equation is set for each of the assigned bits. In the example illustrated in FIG. 3, the first and second biases are used as the bias for solving the problem (1), the third to sixth biases are used as the bias for solving the problem (2), and the seventh and eighth biases are used as the bias for solving the problem (3). Note that, in FIG. 3, the bias to be used for solving the problem (1), the bias to be used for solving the problem (2), and the bias to be used for solving the problem (3) are expressed by shades of the bias frame.

In the example of the technology disclosed in the present case, a coefficient (weight) value for performing weighting corresponding to "$w_{ij}$" in the Ising model equation is set for each combination of assigned bits. The weight means an interaction between the assigned bits.

In the example illustrated in FIG. 3, the weight corresponding to the combination of the first and second bits is the weight to be used for solving the problem (1), and the weight corresponding to the combination of the third to sixth bits is the weight to be used for solving the problem (2). Similarly, in the example illustrated in FIG. 3, the weight corresponding to the combination of the seventh and eighth bits is used as the weight for solving the problem (3). Note that, in FIG. 3, the weight to be used for solving the problem (1), the weight to be used for solving the problem (2), and the weight to be used for solving the problem (3) are expressed by shades of the weight frame.

Moreover, in the example illustrated in FIG. 3, the weights between the bits to be used for solving the problem (1) and the bits to be used for solving the problems (2) and (3) are set to zero (0). Furthermore, in the example illustrated in FIG. 3, the weights between the bits to be used for solving the problem (2) and the bits to be used for solving the problems (1) and (3) are set to zero (0). Similarly, in the example illustrated in FIG. 3, the weights between the bits to be used for solving the problem (3) and the bits to be used for solving the problems (1) and (2) are set to zero (0). Namely, in the example illustrated in FIG. 3, regarding the three combinatorial optimization problems, the weights between the bits to be used for solving the combinatorial optimization problems (the problems (1) to (3)) different from each other are set to zero.

As described above, in the example of the technology disclosed in the present case, the interaction between the bits to be used for solving the combinatorial optimization problems different from each other in the plurality of combinatorial optimization problems is set to zero. In other words, in one example of the technology disclosed in the present case, the interaction between each of the plurality of first bits and each of the plurality of second bits is set to zero. In the example of the technology disclosed in the present case, the combinatorial optimization problems different from each other in the plurality of combinatorial optimization problems can be correctly solved by the above configuration.

Furthermore, in the example illustrated in FIG. 3, the three combinatorial optimization problems can be collectively solved (as one job).

Here, since the Ising model equation is minimized using the annealing machine or the like, the calculation time needed for solving the combinatorial optimization problems depends on, for example, a parameter (for example, the number of calculation iterations (iteration count)) in executing calculation by the annealing method, and the like. Therefore, even if the number of bits to be assigned for solving the combinatorial optimization problems becomes large, the calculation time needed for solving the combinatorial optimization problems generally becomes the same as the calculation time needed for solving one combinatorial optimization problems, in the case of solving the combinatorial optimization problems having the same quality.

Therefore, assuming that the calculation time needed for solving each of the problems (1), (2), and (3) is one second each, the three combinatorial optimization problems can be solved in a total of one second in the example illustrated in FIG. 3. Namely, in the example illustrated in FIG. 3, the three combinatorial optimization problems can be solved in one-third (1/3) of the calculation time of the example of the conventional technology illustrated in FIG. 2. Therefore, in the example of the technology disclosed in the present case, for example, even in a case of solving N combinatorial optimization problems each taking one second to solve, all the combinatorial optimization problems can be solved in one second. Therefore, the calculation time of the present case can be reduced to 1/N of the calculation time of the conventional technology.

As described above, the technology disclosed in the present case can collectively and correctly solve a plurality of combinatorial optimization problems, thereby shorten the calculation time needed for solving the plurality of combinatorial optimization problems than the conventional technology. Namely, the technology disclosed in the present case can solve a plurality of combinatorial optimization problems in a short time without individually repeating solving the problems.

Hereinafter, the optimization device as an example of the technology disclosed in the present case will be described in more detail. Note that the processing (operation) such as solving the combinatorial optimization problem in the optimization device as an example of the technology disclosed in the present case can be performed by a solution unit included in the optimization device, for example.

<Combinatorial Optimization Problem>

In the technology disclosed in the present case, the combinatorial optimization problem to be solved is not particularly limited as long as the combinatorial optimization problem can be expressed by the Ising model, and can be appropriately selected according to the purpose.

Examples of possible combinatorial optimization problems include problems such as molecular (compound) similarity search, peptide stable structure search, portfolio optimization in finance, personalized advertising optimization in digital marketing, and warehouse component placement optimization in factories and logistics.

Furthermore, the technology disclosed in the present case can be particularly favorably used in a case of solving a large number of combinatorial optimization problems, for example. For example, as described above, in a case of obtaining similarity between compounds by solving a combinatorial optimization problem in drug discovery or the like, there are some cases where the similarity of various compounds needs to be calculated with respect to one reference compound (query compound).

In the case of obtaining similarity between compounds by solving a combinatorial optimization problem using an annealing machine or the like, for example, about 20 to 80 bits are assigned in the calculation of the similarity between two compounds in obtaining the similarity between the compounds having the size (the number of atoms) as illustrated in FIG. 1 The number of bits that can be handled by the annealing machine (the number of bits that can be prepared) differs depending on each type of the annealing machine. For example, in the case of about 8,000 bits, more than 100 ways of similarity between two compounds can be calculated by one-time calculation.

In the technology disclosed in the present case, when solving a plurality of combinatorial optimization problems, all the combinatorial optimization problems to be solved are not necessarily the same type of combinatorial optimization problems, and may include different types of combinatorial optimization problems. The technology disclosed in the present case can collectively (by one job) solve a combinatorial optimization problem for obtaining the similarity between compounds and a combinatorial optimization problem for optimizing warehouse component placement in a factory, for example.

As described above, in the technology disclosed in the present case, the plurality of combinatorial optimization problem may include at least either the same type or different types of combinatorial optimization problems. In other words, in the technology disclosed in the present case, the first combinatorial optimization problem and the second combinatorial optimization problem can be the same type or different types of combinatorial optimization problems.

<Preparation of Bits>

In the example of the technology disclosed in the present case, bits for solving a plurality of combinatorial optimization problems are prepared. Here, in the example of the technology disclosed in the present case, computer bits used for solving a combinatorial optimization problem can be used in preparing the bits, for example. The computer to be used for solving a combinatorial optimization problem is not particularly limited and can be appropriately selected according to the purpose. A computer in an annealing method (annealing machine) that performs a ground state search for the cost function represented in the Ising model is favorable.

Examples of the annealing machine include a quantum annealing machine, a semiconductor annealing machine using a semiconductor technology, a machine that performs simulated annealing executed by software using a central processing unit (CPU) or a graphics processing unit (GPU), and the like. Furthermore, for example, a digital annealer (registered trademark) may be used as the annealing machine.

Furthermore, the bits for solving the plurality of combinatorial optimization problems can be, for example, selected according to the type of the annealing machine to be used for solving the combinatorial optimization problems, and may be arithmetic bits (normal bits having values of 0 or 1) or may be quantum bits (bis capable of quantum superposition), for example.

The number of bits to be prepared (for example, the number of bits of the annealing machine) is not particularly limited and can be appropriately selected according to the purpose as long as the number is equal to or larger than the total number of bits needed for solving each of the combinatorial optimization problems in the plurality of combinatorial optimization problems to be solved.

Furthermore, in the technology disclosed in the present case, solving a plurality of combinatorial optimization problems may be performed a plurality of times. For example, in a case of solving twenty combinatorial optimization problems each using 100 bits to solve, using an annealing machine that can prepare 1,000 bits, first, ten combinatorial optimization problems are collectively solved, and then the remaining ten combinatorial optimization problems may be collectively solved. As described above, in the technology disclosed in the present case, the number of times of solving a plurality of combinatorial optimization problems can be appropriately selected according to the number of prepared bits and the number of bits assigned to a combinatorial optimization problem to be solved.

<Bit Assignment>

In the example of the technology disclosed in the present case, bits to be used for solving individual combinatorial optimization problems in the plurality of combinatorial optimization problems are assigned in the prepared bits. Namely, in the example of the technology disclosed in the present case, the bits to be used for solving individual combinatorial optimization problems included in the plurality of combinatorial optimization problems are assigned to the prepared bits.

In other words, in the example of the technology disclosed in the present case, the plurality of first bits, among the plurality of bits for solving the plurality of combinatorial optimization problems, is assigned to the first combinatorial optimization problem included in the plurality of combinatorial optimization problems. Moreover, in the example of the technology disclosed in the present case, the plurality of second bits, among the plurality of bits for solving the plurality of combinatorial optimization problems, is assigned to the second combinatorial optimization problem included in the plurality of combinatorial optimization problems.

The assignment of the bits to be used for solving the individual combinatorial optimization problem can be performed by setting the bias of each bit and the interaction between bits, corresponding to the individual combinatorial optimization problem, in the Ising model in the combinatorial optimization problem to be solved, for example.

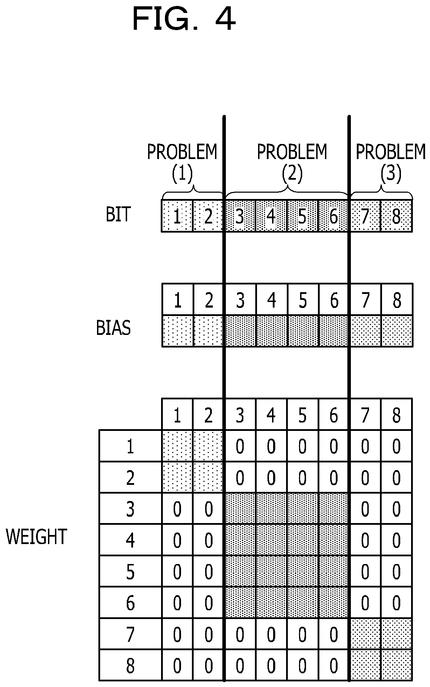

For example, in the example illustrated in FIG. 4, the first and second biases are used as the bias for solving the problem (1), the third to sixth biases are used as the bias for solving the problem (2), and the seventh and eighth biases are used as the bias for solving the problem (3). Moreover, the weight (interaction) corresponding to the combination of the first and second bits is the weight to be used for solving the problem (1), and the weight corresponding to the combination of the third to sixth bits is the weight to be used for solving the problem (2). Similarly, in the example illustrated in FIG. 4, the weight corresponding to the combination of the seventh and eighth bits is used as the weight for solving the problem (3). Note that, in FIG. 4, the bias and weight to be used for solving each problem are expressed by shades of the bias frame.

In the example illustrated in FIG. 4, by setting the bias and weight as described above, the first and second bits can be assigned as the bits to be used for solving the problem (1). Similarly, in the example in FIG. 4, the third and sixth bits can be assigned as the bits to be used for solving the problem (2), and the seventh and eighth bits can be assigned as bits to be used for solving the problem (3).

In the technology disclosed in the present case, the bits to be used for solving the individual combinatorial optimization problems are assigned such that bits to be used for solving one combinatorial optimization problem and bits for solving another combinatorial optimization problem do not overlap in the plurality of combinatorial optimization problems, for example. In other words, in the technology disclosed in the present case, the bias and weight to be used for solving one combinatorial optimization problem are set not to overlap with the bias and weight to be used for solving another combinatorial optimization problem in the plurality of combinatorial optimization problems, for example.

As described above, in the example of the technology disclosed in the present case, the bits to be used for solving the individual combinatorial optimization problems in the plurality of combinatorial optimization problems are assigned not to overlap, whereby the individual combinatorial optimization problems can be reliably and correctly solved.

In the example of the technology disclosed in the present case, the bits to be used for solving the combinatorial optimization problems different from each other are favorably assigned to adjacent to each other, as in the example illustrated in FIG. 4. In other words, in the example of the technology disclosed in the present case, in the prepared bits, the bits to be used for solving one combinatorial optimization problem are favorably assigned adjacent to the bits to be used for solving another combinatorial optimization problems in the plurality of combinatorial optimization problems. Namely, in the example of the technology disclosed in the present case, the plurality of second bits is favorably adjacent to the plurality of first bits in the plurality of bits.

By doing so, in the example of the technology disclosed in the present case, the bits to be used for solving the individual combinatorial optimization problems in the plurality of combinatorial optimization problems can be efficiently assigned, and a larger number of combinatorial optimization problems can be solved in one calculation.

Furthermore, in the technology disclosed in the present case, assigning the bits to be used for solving the individual combinatorial optimization problems (causing the bits to be adjacent) in order from the beginning of the prepared bits is not essential, and the bit assignment format can be appropriately selected according to the purpose.

In the technology disclosed in the present case, the bits to be used (to adjacent) for solving the combinatorial optimization problems different from each other may not be adjacent to each other, for example. In other words, in the technology disclosed in the present case, a bit not to be used (not to be assigned) for solving the combinatorial optimization problems may be present between the bits to be used for solving one combinatorial optimization problem and the bits to be used for solving another combinatorial optimization problem. Namely, in the technology disclosed in the present case, a bit not to be used (not to be assigned) for solving the plurality of combinatorial optimization problems may be present between the plurality of first bits and the plurality of second bits.

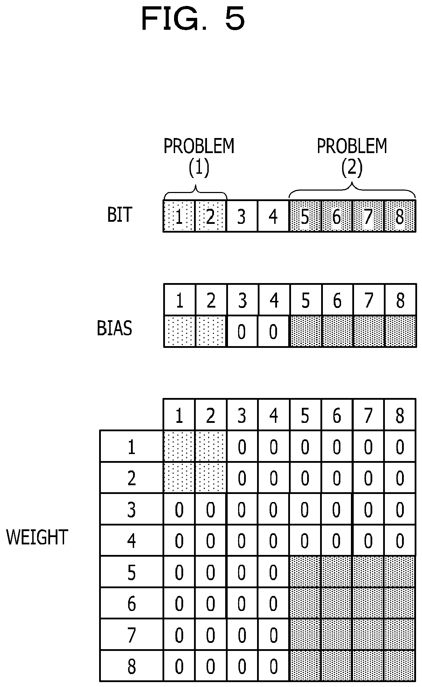

For example, as illustrated in FIG. 5, a bit not to be used for solving the combinatorial optimization problems may be present between the bits to be used for solving the problem (1) and the bits to be used for solving the problem (2). Note that the bits not to be used for solving the plurality of combinatorial optimization problems can be, for example, bits in which the corresponding bias value and weight value are all zero.

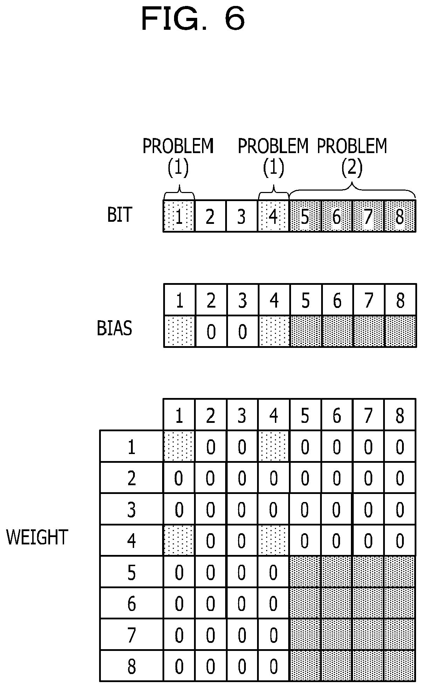

Moreover, in the technology disclosed in the present case, the bits to be used for solving the individual combinatorial optimization problems may not form a group, for example. In other words, in the technology disclosed in the present case, a bit not to be used (not to be assigned) for solving the combinatorial optimization problems may be present between the bits to be used for solving one combinatorial optimization problem. For example, as illustrated in FIG. 6, a bit not to be used for solving the combinatorial optimization problems may be present between the bits to be used for solving the problem (1).

<Interaction Between Bits>

In the example of the technology disclosed in the present case, the interaction (weight) between the bits to be used for solving the combinatorial optimization problems different from each other in the plurality of combinatorial optimization problems is set to zero. In other words, in the example of the technology disclosed in the present case, in the weights related to the bits to be used for solving one combinatorial optimization problem in the plurality of combinatorial optimization problems, weights other than the weights of a combination of the bits to be used for solving the one combinatorial optimization problem are set to zero. Namely, in the example of the technology disclosed in the present case, the interaction between each of the plurality of first bits and each of the plurality of second bits is set to zero.

Here, returning to FIG. 4, setting the interaction between the bits to be used for solving the combinatorial optimization problems different from each other in the plurality of combinatorial optimization problems to zero will be described.

As illustrated in the example in FIG. 4, in the weights including the first and second bits assigned to the solution of the problem (1) (the weights including the first or second bit in the row or column), weights other than the weights of a combination of the first or second bits are set to zero. Similarly, in the weights including the third to sixth bits assigned to the solution of the problem (2) (the weights including any of the third to sixth bits in the row or column), weights other than the weights of a combination of the third to sixth bits are set to zero. Moreover, in the weights including the seventh and eighth bits assigned to the solution of the problem (3) (the weights including the seventh or eighth bit in the row or column), weights other than the weights of a combination of the seventh or eighth bits are set to zero.

As described above, in the example illustrated in FIG. 4, the weights other than the weights between the bits to be used for solving each of the individual combinatorial optimization problems (each of the problems (1) to (3)) in the three combinatorial optimization problems are set to zero. In other words, in the example illustrated in FIG. 4, the interaction between the bits to be used for solving the combinatorial optimization problems different from each other, in the three combinatorial optimization problems, is set to zero. Furthermore, in the examples illustrated in FIGs. 5 and 6, the interaction between the bits to be used for solving the combinatorial optimization problems different from each other, in the three combinatorial optimization problems, is set to zero.

In the example of the technology disclosed in the present case, the interaction between the bits to be used for solving the combinatorial optimization problems different from each other in the plurality of combinatorial optimization problems is set to zero, as in the above-described example. In other words, in one example of the technology disclosed in the present case, the interaction between each of the plurality of first bits and each of the plurality of second bits is set to zero. By doing so, in the example of the technology disclosed in the present case, regions of the bits for calculating the individual combinatorial optimization problems (regions of the bias and weight) can be separated. Therefore, the individual combinatorial optimization problems can be correctly solved.

Furthermore, when setting the interaction (weight) between the bits used for solving the combinatorial optimization problems different from each other in the plurality of combinatorial optimization problems to zero, setting the weight to "strict zero (0)" is not essential, and a numerical value considered to be "substantially zero" may be adopted. The numerical value considered to be "substantially zero" can be, for example, a numerical value of the magnitude that does not affect the solution result of the combinatorial optimization problem (the magnitude in which the combinatorial optimization problem can be correctly solved).

The numerical value that can be considered to be "substantially zero" vary relative to, for example, the magnitude of the numerical values of the bias and weight to be used for solving the combinatorial optimization problem. For example, in the case where the numerical values of the bias and weight are large, the numerical value that can be considered to be "substantially zero" may be somewhat a large numerical value as long as the value does not affect the solution result of the combinatorial optimization problem.

Here, the interaction (weight) between bits to be used for solving the same combinatorial optimization problem in the plurality of combinatorial optimization problems is not particularly limited and can be appropriately selected according to the purpose, and can be, for example, an integer. For example, the interaction between the bits to be used for solving the same combinatorial optimization problem may be a positive integer, may be a negative integer, or may be zero.

The weight between the bits of the same number, in the interaction between the bits to be used for solving the same combinatorial optimization problem in the plurality of combinatorial optimization problems is favorably set to zero, for example. In other words, in the example of the technology disclosed in the present case, the weight of a combination of the bits of the same number, such as the weight between the first bit and the first bit, for example, has a meaning (role) similar to the bias and is thus favorably set to zero.

<Solving Plurality of Combinatorial Optimization Problems>

In the example of the technology disclosed in the present case, regarding the plurality of combinatorial optimization problems, the bits to be used for solving the individual combinatorial optimization problems are assigned, the interaction between the bits to be used for solving the combinatorial optimization problems different from each other is set to zero, and then the plurality of combinatorial optimization problems is solved. Namely, in the example of the technology disclosed in the present case, the plurality of first bits is assigned to the first combinatorial optimization problem and the plurality of second bits is assigned to the second combinatorial optimization problem, the interaction between each of the plurality of first bits and each of the plurality of second bits is set to zero, and the plurality of combinatorial optimization problems is solved.

Here, the method for solving the plurality of combinatorial optimization problems is not particularly limited, and can be appropriately selected according to the purpose, but a method for solving the problems based on the "cost function" that is the function based on the conditions and restrictions in the combinatorial optimization problems is favorable. In the example of the technology disclosed in the present case, the combinatorial optimization problem can be solved by searching for the combination of variables by which the cost function takes the minimum value.

The cost function can be appropriately selected according to the conditions and restrictions of the combinatorial optimization problem to be solved, and a similar function format (expression) can be used for the same type of combinatorial optimization problems, for example. A specific mathematical equation of the cost function and the like will be described below.

In the example of the technology disclosed in the present case, the cost function is favorably a function defined to set the interaction between the bits to be used for solving the same combinatorial optimization problem in the plurality of combinatorial optimization problems to be an integer. In other words, in the example of the technology disclosed in the present case, the cost function is favorably a function defined to set the interaction between the respective bits included in the plurality of first bits to be an integer, and the interaction between the respective bits included in the plurality of second bits to be an integer. Furthermore, in the example of the technology disclosed in the present case, the cost function is favorably a function defined to set the interaction between the bits to be used for solving the combinatorial optimization problems different from each other in the plurality of combinatorial optimization problems to be zero.

Namely, in the example of the technology disclosed in the present case, the cost function is favorably a function defined to set the interaction between the bits used for solving the same combinatorial optimization problem to be an integer, and the interaction between the bits to be used for solving the combinatorial optimization problems different from each other to be zero. By doing so, in the example of the technology disclosed in the present case, the weight to be used for solving the individual combinatorial optimization problem can be easily set, and user's convenience when solving the plurality of combinatorial optimization problems can be further improved.

Furthermore, as the method for solving the plurality of combinatorial optimization problems based on the cost function, a method for solving the combinatorial optimization problems by converting the cost function into the format called Ising model, and minimizing the value of the cost function converted in to the Ising model is favorable. Note that, in the example of the technology disclosed in the present case, the cost function is sometimes originally expressed in the Ising model format, and in this case, the conversion of the cost function into the Ising model may not be performed.

The minimization of the value of the cost function converted into the Ising model can be executed in a short time by performing the annealing method (annealing) using the annealing machine or the like, for example. Namely, in the example of the technology disclosed in the present case, it is favorable to solve the plurality of combinatorial optimization problems by the annealing method. Note that details of the annealing method using the annealing machine will be described below.

As the cost function converted into the Ising model, for example, use of the mathematical equation represented by the following mathematical Equation (1) is favorable.

[Equation 2]

$$E = -\sum_{i,j=0} w_{ij}\, x_i x_j - \sum_{i=0} b_i x_i \qquad \text{... Equation (1)}$$

Note that, in the above Equation (1), E represents the cost function that means minimization solves the plurality of combinatorial optimization problems.

$w_{ij}$ is a numerical value representing the interaction between the i-th bit and the j-th bit.

$x_i$ is a binary variable representing that the i-th bit is 0 or 1, and $x_j$ is a binary variable representing that the j-th bit is 0 or 1.

bi is a numerical value representing the bias for the i-th bit.

Here, $w_{ij}$ in the above Equation (1) can be obtained by, for example, extracting the numerical value of each parameter in the cost function before being converted into the Ising model, and the like, for each combination of $x_i$ and $x_j$, and is usually a matrix.

The first term on the right side in the above Equation (1) is obtained by integrating the product of the state (state) and weight value (weight) of two circuits for all of combinations of two circuits selectable from all the circuits without omission or duplication.

Furthermore, the second term on the right side in the above Equation (1) is obtained by integrating the product of the value and state of the bias of each of all the circuits.

Namely, the cost function can be converted to the Ising model represented by the above Equation (1) by extracting the parameters of the cost function before being converted into the Ising model and obtaining $w_{ij}$ and $b_i$.

In the example of the technology disclosed in the present case, the $w_{ij}$ (weight) and $b_i$ (bias) in the above Equation (1) can be set corresponding to the individual combinatorial optimization problem, as in the example illustrated in FIG. 4 described above, for example. By doing so, in the example of the technology disclosed in the present case, regarding the plurality of combinatorial optimization problems, the bits to be used for solving the individual combinatorial optimization problems are assigned, and the interaction between the bits to be used for solving the combinatorial optimization problems different from each other can be set to zero.

In the example of the technology disclosed in the present case, in the above Equation (1), $x_i$ and $x_j$ are changed using the annealing machine or the like based on $w_{ij}$ and $b_i$ set corresponding to the individual combinatorial optimization problem, and the above Equation (1) is minimized. Namely, in the example of the technology disclosed in the present case, the above Equation (1) is minimized using the annealing machine or the like, whereby the bit state of when the above Equation (1) takes the minimum value (when the minimum value is given to the above Equation (1)) can be obtained.

As described above, in the example of the technology disclosed in the present case, the minimum value of the cost function and the bit state that provides the minimum value can be obtained as a result of solving the plurality of combinatorial optimization problems.

In the example of the technology disclosed in the present case, the optimum bit state of the individual combinatorial optimization problem (the bit state that provides the minimum value to the individual cost function) can be obtained from the bit state as a result of solving the plurality of combinatorial optimization problems. In the example of the technology disclosed in the present case, the individual combinatorial optimization problem can be solved by obtaining the state of the bits (assigned bits) used for solving the individual combinatorial optimization problem from the bit state (the entire bit state) obtained by solving the plurality of combinatorial optimization problems.

Here, as an example, consider a case of obtaining the similarity of a large number of compounds with respect to one reference compound (query compound) as the plurality of combinatorial optimization problems. In the present case, the similar of each individual compound with respect to the query compound can be calculated based on the state of the bits used for solving the individual combinatorial optimization problem, the bit state being obtained from the bit state obtained by solving the plurality of combinatorial optimization problems. Note that details of the method for calculating the similarity between compounds will be described below.

Furthermore, in the example of the technology disclosed in the present case, when solving the plurality of combinatorial optimization problems, all the combinatorial optimization problems to be solved are not necessarily the same type of combinatorial optimization problems, and may include different types of combinatorial optimization problems, as described above.

Here, when solving the combinatorial optimization problem, it is favorable to appropriately set the calculation conditions according to the nature of the combinatorial optimization problem to be solved. Examples of the calculation conditions in solving the combinatorial optimization problem include annealing machine parameters in the annealing machine, and the like. Examples of the annealing parameters in the annealing machine include parameters corresponding to the number of calculation iterations (iteration count), the parameter corresponding to the annealing temperature, and the like.

In the case where different types of combinatorial optimization problems are included in the plurality of combinatorial optimization problems, it is favorable to use the calculation conditions for solving a problem most difficult to solve (a problem that takes time to solve) among the combinatorial optimization problems to be solved, as the calculation conditions of when solving the combinatorial optimization problems. By doing so, in the example of the technology disclosed in the present case, all the combinatorial optimization problems in the plurality of combinatorial optimization problems can be reliably and correctly solved.

In the example of the technology disclosed in the present case, in the case of using the calculation conditions of when solving the problem most difficult to solve among the combinatorial optimization problems to be solved, the calculation time for solving the plurality of combinatorial optimization problems becomes the same as the calculation time needed for solving the problem most difficult to solve. In this case, for example, in a case of solving a combinatorial optimization problem that takes ten seconds to solve, a combinatorial optimization problem that takes five seconds to solve, and a combinatorial optimization problem that takes seven seconds to solve, the time needed for solving the three combinatorial optimization problems becomes ten seconds.

Hereinafter, the example of the technology disclosed in the present case will be described in more detail using configuration examples of the device, flowcharts, and the like.

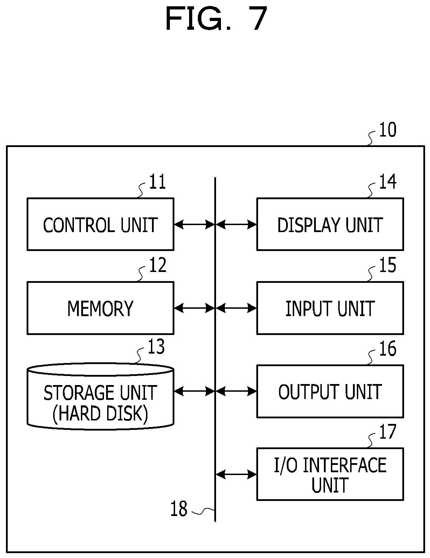

FIG. 7 illustrates a hardware configuration example of the optimization device disclosed in the present case.

In an optimization device 10, for example, a control unit 11, a memory 12, a storage unit 13, a display unit 14, an input unit 15, an output unit 16, and an I/O interface unit 17 are connected via a system bus 18.

The control unit 11 performs arithmetic operations (for example, four arithmetic operations, comparison operations, and arithmetic operations for the annealing method), hardware and software operation control, and the like.

The control unit 11 is not particularly limited and can be appropriately selected according to the purpose. For example, the control unit 11 may be a CPU or an optimization device used for the annealing method to be described below, or may be a combination of these devices.

The solution unit in the optimization device disclosed in the present case can be implemented by, for example, the control unit 11.

The memory 12 is a memory such as a random access memory (RAM) or a read only memory (ROM). The RAM stores an operating system (OS), an application program, and the like read from the ROM and the storage unit 13, and functions as a main memory and a work area of the control unit 11.

The storage unit 13 is a device that stores various kinds of programs and data, and may be a hard disk, for example. The storage unit 13 stores a program to be executed by the control unit 11, data to be used in executing the program, an OS, and the like.

Furthermore, an optimization program disclosed in the present case is stored in, for example, the storage unit 13, is loaded into the RAM (main memory) of the memory 12, and is executed by the control unit 11.

The display unit 14 is a display device, and may be a display device such as a cathode ray tube (CRT) monitor or a liquid crystal panel, for example.

The input unit 15 is an input device for various kinds of data, and may be a keyboard or a pointing device (such as a mouse or the like), for example.

The output unit 16 is an output device for various kinds of data, and may be a printer or the like, for example.

The I/O interface unit 17 is an interface for connecting various external devices. The I/O interface unit 17 enables input and output of data of, for example, a compact disc read only memory (CD-ROM), a digital versatile disk read only memory (DVD-ROM), a magneto-optical (MO) disk, a universal serial bus (USB) memory (USB flash drive), or the like.

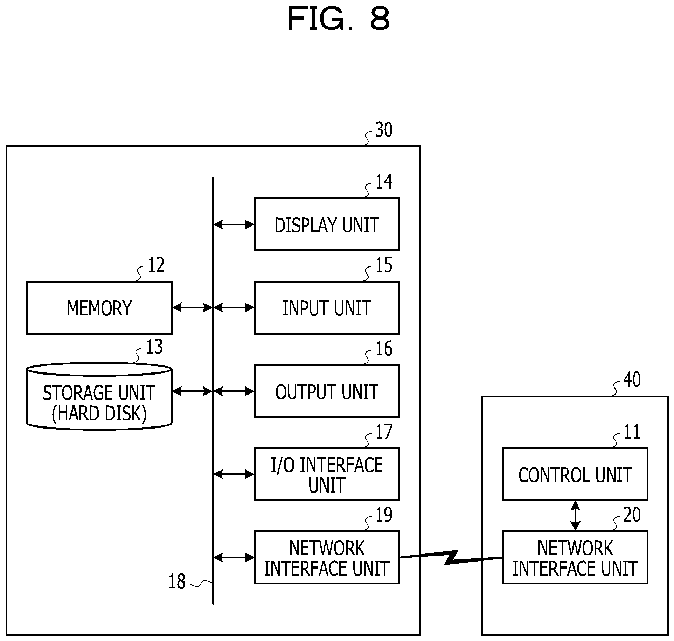

FIG. 8 illustrates another hardware configuration example of the optimization device disclosed in the present case.

The example illustrated in FIG. 8 is an example of a case where the optimization device is a cloud-type device, and the control unit 11 is independent of the storage unit 13 and the like. In the example illustrated in FIG. 8, a computer 30 that includes the storage unit 13 and the like is connected to a computer 40 that includes the control unit 11 via network interface units 19 and 20.

The network interface units 19 and 20 are hardware that performs communication using the Internet.

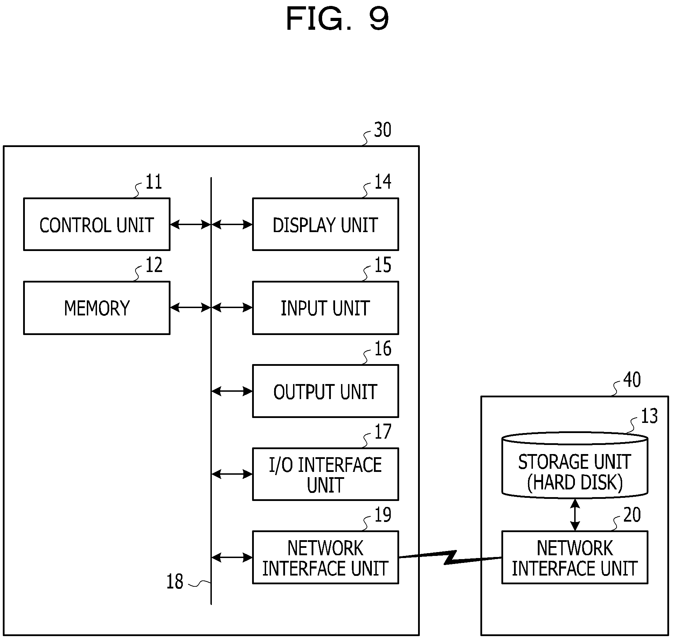

FIG. 9 illustrates another hardware configuration example of the optimization device disclosed in the present case.

The example illustrated in FIG. 9 is an example of a case where the optimization device is a cloud-type device, and the storage unit 13 is independent of the control unit 11 and the like. In the example illustrated in FIG. 9, the computer 30 that includes the control unit 11 and the like is connected to the computer 40 that includes the storage unit 13 via network interface units 19 and 20.

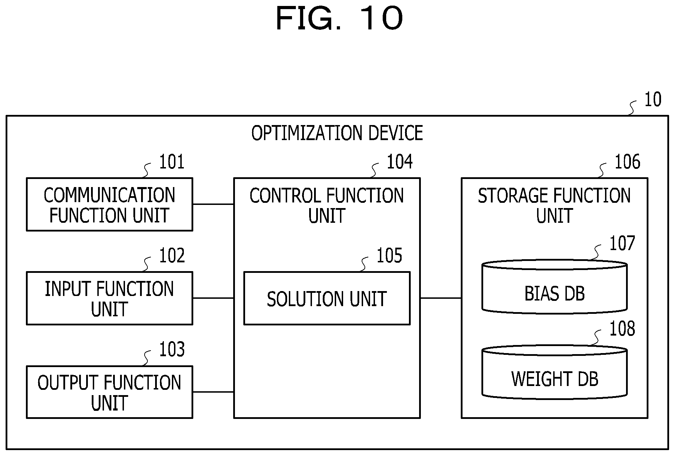

FIG. 10 illustrates a functional configuration example as an embodiment of the optimization device disclosed in the present case.

As illustrated in FIG. 10, the optimization device 10 includes a communication function unit 101, an input function unit 102, an output function unit 103, a control function unit 104, and a storage function unit 106.

The communication function unit 101 transmits and receives various data to and from an external device, for example. The communication function unit 101 may receive, for example, bias and weight data in the cost function converted into the Ising model from an external device.

The input function unit 102 accepts, for example, various instructions for the optimization device 10. Furthermore, the input function unit 102 may accept input of the bias and weight data in the cost function converted into the Ising model, for example.

The output function unit 103 outputs, for example, information of the minimum value of the cost function, the state of bits giving the minimum value, and the like, in a plurality of solved combinatorial optimization problems.

The control function unit 104 includes a solution unit 105. The control function unit 104 executes, for example, various programs stored in the storage function unit 106, and controls the operation of the entire optimization device 10.

The solution unit 105 performs processing of solving a plurality of combinatorial optimization problems.

The storage function unit 106 includes a bias database (bias DB) 107 and a weight database (weight DB) 108. The storage function unit 106 stores, for example, various programs.

The bias DB 107 is a database that stores bias data in the cost function converted into the Ising model, which is used for solving the plurality of combinatorial optimization problems.

The weight DB 108 is a database that stores weight (interaction) data in the cost function converted into the Ising model, which is used for solving the plurality of combinatorial optimization problems.

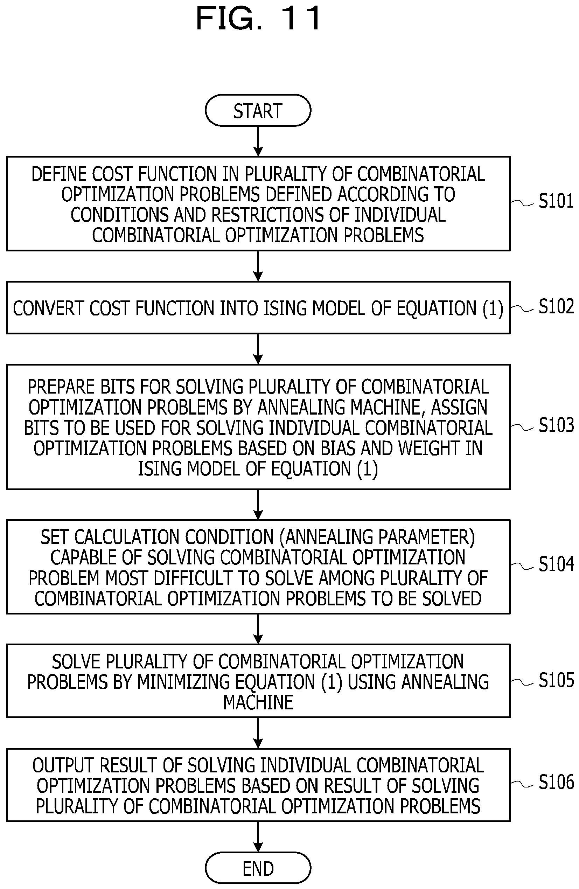

FIG. 11 illustrates an example of a flowchart for solving a plurality of combinatorial optimization problems using an example of the technology disclosed in the present case.

First, the solution unit 105 defines the cost function of the plurality of combinatorial optimization problems defined according to the conditions and restrictions of the individual combinatorial optimization problems in the plurality of combinatorial optimization problems (S101). At this time, the solution unit 105 may accept an input of the cost function by the communication function unit 101 or the input function unit 102 and define the cost function of the plurality of combinatorial optimization problems.

Next, the solution unit 105 extracts the parameters in the defined cost function and obtains the $b_i$ (bias) and $w_{ij}$ (weight) in the above mathematical Equation (1) to convert the cost function into the Ising model expressed by the above Equation (1) (S102).

Next, the solution unit 105 prepares bits for solving the plurality of combinatorial optimization problems by the annealing machine. Then, for the prepared bits, the solution unit 105 assigns the bits to be used for solving the individual combinatorial optimization problems based on the $b_i$ (bias) and $w_{ij}$ (weight) in the Ising model of the above equation (1) (S103). In other words, in S103, the solution unit 105 sets the $b_i$ (bias) and $w_{ij}$ (weight) in the Ising model of the above Equation (1) corresponding to the individual combinatorial optimization problems and assigns the bits to be used for solving the individual combinatorial optimization problems.

Then, the solution unit 105 sets a calculation condition (annealing parameter) capable of solving the combinatorial optimization problem that is the most difficult to solve (takes time to solve) among the plurality of combinatorial optimization problems to be solved (S104). Here, in S104, the solution unit 105 sets the number of calculation iterations (iteration count), the parameter corresponding to the annealing temperature, and the like, as the annealing parameters.

Next, the solution unit 105 solves the plurality of combinatorial optimization problems by minimizing the above Equation (1) with the annealing machine (S105). In other words, in S105, the solution unit 105 solves the plurality of combinatorial optimization problems by calculating the minimum energy in the above Equation (1) by executing the ground state search using the annealing method for the above Equation (1).

Subsequently, the solution unit 105 outputs a result of solving the individual combinatorial optimization problems based on the result of solving the plurality of combinatorial optimization problems (S106). Then, when the solution unit 105 outputs the result of solving the individual combinatorial optimization problems, the solution unit 105 terminates the processing.

Note that, here, a specific processing order has been described as an example of the technology disclosed in the present case. However, the technology disclosed in the present case is not limited thereto, and the order of processing may be changed as appropriate as long as there is no technical contradiction, or a plurality of processes may be collectively performed.

Examples of the annealing method and the annealing machine will be described below.

The annealing method is a method for probabilistically working out a solution using superposition of random number values and quantum bits. The following describes a problem of minimizing a value of an evaluation function to be optimized as an example. The value of the evaluation function is referred to as energy. Furthermore, when the value of the evaluation function is maximized, the sign of the evaluation function only needs to be changed.

First, a process is started from an initial state in which one of discrete values is assigned to each variable. With respect to a current state (combination of variable values), a state close to the current state (for example, a state in which only one variable is changed) is selected, and a state transition therebetween is considered. An energy change with respect to the state transition is calculated. Depending on the value, it is probabilistically determined whether to adopt the state transition to change the state or not to adopt the state transition to keep the original state. In a case where an adoption probability when the energy goes down is selected to be larger than that when the energy goes up, it can be expected that a state change will occur in a direction that the energy goes down on average, and that a state transition will occur to a more appropriate state over time. Then, there is a possibility that an optimum solution or an approximate solution that gives energy close to the optimum value can be obtained finally.

If this is adopted when the energy goes down deterministically and is not adopted when the energy goes up, the energy change decreases monotonically in a broad sense with respect to time, but no further change occurs when a local solution is reached. As described above, since there are a very a large number of local solutions in the discrete optimization problem, a state is almost certainly caught in a local solution that is not so close to an optimum value. Therefore, when the discrete optimization problem is solved, it is important to determine probabilistically whether to adopt the state.

In the annealing method, it has been proved that by determining an adoption (permissible) probability of a state transition as follows, a state reaches an optimum solution in the limit of infinite time (iteration count).

In the following, a method for working out an optimum solution using the annealing method will be described step by step.

(1) For an energy change (energy reduction) value ($-\Delta E$) due to a state transition, a permissible probability p of the state transition is determined by any one of the following functions f (). [Equation 3]

$$p(\Delta E, T) = f(-\Delta E / T) \qquad \text{Equation (1-1)}$$

[Equation 4]

$$f_{metro}(x) = \min(1, e^x)$$ (Metropolis method) Equation (1-2)

[Equation 5]

$$f_{Gibbs}(x) = \frac{1}{1 + e^{-x}}$$ (Gibbs electrode method) Equation (1-3)

Here, T represents a parameter called temperature value and can be changed as follows, for example.
(2) The temperature value T is logarithmically reduced with respect to an iteration count t as represented by the following equation.
[Equation 6]

$$T = \frac{T_0 \log(c)}{\log(t+c)}$$ Equation (2)

Here, $T_0$ is an initial temperature value, and is desirably a sufficiently large value depending on a problem.

In a case where the permissible probability represented by the Equation in (1) is used, if a steady state is reached after sufficient iterations, an occupation probability of each state follows a Boltzmann distribution for a thermal equilibrium state in thermodynamics.

Then, when the temperature is gradually lowered from a high temperature, an occupation probability of a low energy state increases. Therefore, it is considered that the low energy state is obtained when the temperature is sufficiently lowered. Since this state is very similar to a state change caused when a material is annealed, this method is referred to as the annealing method (or pseudo-annealing method). Note that probabilistic occurrence of a state transition that increases energy corresponds to thermal excitation in physics.

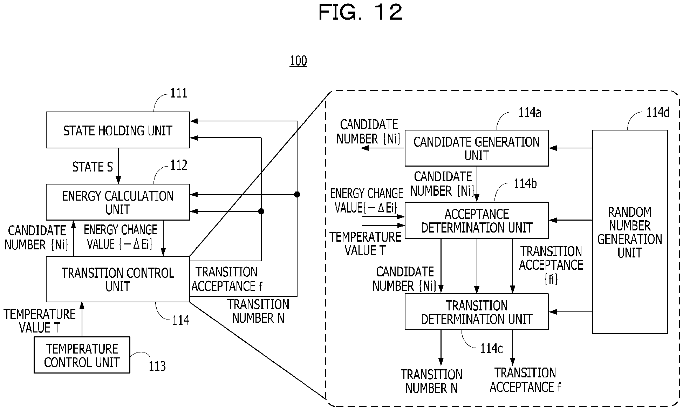

FIG. 12 illustrates an example of a functional configuration of an annealing machine that performs an annealing method. However, in the following description, a case of generating a plurality of state transition candidates is also described, but a basic annealing method generates one transition candidate at a time.

An annealing machine 100 includes a state holding unit 111 that holds a current state S (a plurality of state variable values). Furthermore, the annealing machine 100 includes an energy calculation unit 112 that calculates an energy change value {-ΔEi} of each state transition when a state transition from the current state S occurs due to a change in any one of the plurality of state variable values. Moreover, the annealing machine 100 includes a temperature control unit 113 that controls the temperature value T and a transition control unit 114 that controls a state change. Note that the annealing machine 100 can be a part of the above-described optimization device 10.

The transition control unit 114 probabilistically determines whether or not to accept any one of a plurality of state transitions according to a relative relationship between the energy change value {-ΔEi} and thermal excitation energy, based on the temperature value T, the energy change value {-ΔEi}, and a random number value.

Here, the transition control unit 114 includes a candidate generation unit 114a that generates a state transition candidate, and an availability determination unit 114b for probabilistically determining whether or not to permit a state transition for each candidate based on the energy change value {-ΔEi} and the temperature value T. Moreover, the transition control unit 114 includes a transition determination unit 114c that determines a candidate to be adopted from the candidates that have been permitted, and a random number generation unit 114d that generates a random variable.

The operation of the annealing machine 100 in one iteration is as follows.

First, the candidate generation unit 114a generates one or more state transition candidates (candidate number {Ni}) from the current state S held in the state holding unit 111 to a next state. Next, the energy calculation unit 112 calculates the energy change value {-ΔEi} for each state transition listed as a candidate using the current state S and the state transition candidates. The availability determination unit 114b permits a state transition with a permissible probability of the above equation (1) according to the energy change value {-ΔEi} of each state transition using the temperature value T generated by the temperature control unit 113 and the random variable (random number value) generated by the random number generation unit 114d.

Then, the availability determination unit 114b outputs availability {fi} of each state transition. In a case where there is a plurality of permitted state transitions, the transition determination unit 114c randomly selects one of the permitted state transitions using a random number value. Then, the transition determination unit 114c outputs a transition number N and transition availability f of the selected state transition. In a case where there is a permitted state transition, a state variable value stored in the state holding unit 111 is updated according to the adopted state transition.

Starting from an initial state, the above-described iteration is repeated while the temperature value is lowered by the temperature control unit 113. When a completion determination condition such as reaching a certain iteration count or energy falling below a certain value is satisfied, the operation is completed. The answer output by the annealing machine 100 is a state at the end.

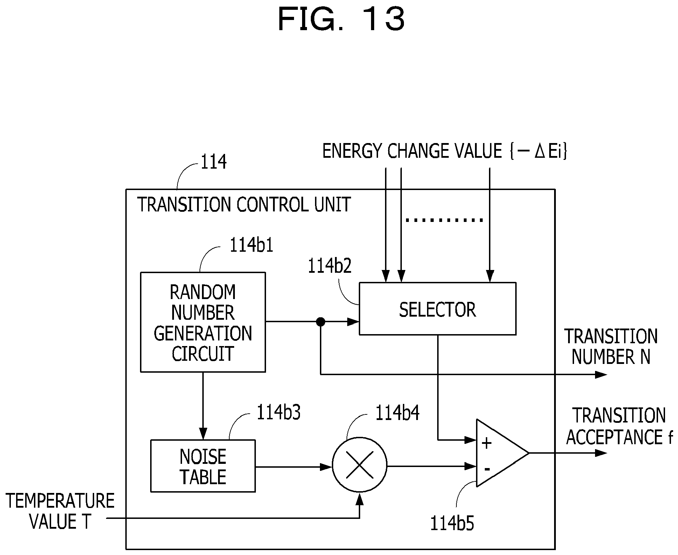

FIG. 13 is a circuit-level block diagram of an exemplary configuration of the transition control unit in a normal annealing method for generating one candidate at a time, particularly an arithmetic unit for the availability determination unit.

The transition control unit 114 includes a random number generation circuit 114b1, a selector 114b2, a noise table 114b3, a multiplier 114b4, and a comparator 114b5.

The selector 114b2 selects and outputs a value corresponding to the transition number N, which is a random number value generated by the random number generation circuit 114b1, among energy change values $\{-\Delta Ei\}$ calculated for respective state transition candidates.

The function of the noise table 114b3 will be described later. For example, a memory such as a RAM or a flash memory can be used as the noise table 114b3.

The multiplier 114b4 outputs a product obtained by multiplying a value output by the noise table 114b3 by the temperature value T (corresponding to the above-described thermal excitation energy).

The comparator 114b5 outputs a comparison result obtained by comparing a multiplication result output by the multiplier 114b4 with $-\Delta E$, which is an energy change value selected by the selector 114b2, as transition availability f.

The transition control unit 114 illustrated in FIG. 13 basically implements the above-described functions as they are. However, a mechanism that permits a state transition with a permissible probability represented by the Equation (1) will be described in more detail.

A circuit that outputs 1 at a permissible probability p and outputs 0 at a permissible probability (1-p) can be achieved by inputting a uniform random number that takes the permissible probability p for input A and takes a value of an interval [0, 1) for input B in a comparator that has two inputs A and B, outputs 1 when A > B is satisfied and outputs 0 when A < B is satisfied. Therefore, if the value of the permissible probability p calculated based on the energy change value and the temperature value T using the Equation (1) is input to input A of this comparator, the above-described function can be achieved.

This means that, with a circuit that outputs 1 when f($\Delta E/T$) is larger than u, in which f is a function used in the Equation (1), and u is a uniform random number that takes a value of the interval [0, 1), the above-described function can be achieved.

Furthermore, the same function as the above-described function can also be achieved by making the following modification.

Applying the same monotonically increasing function to two numbers does not change the magnitude relationship. Therefore, an output is not changed even if the same monotonically increasing function is applied to two inputs of the comparator. If an inverse function $f^{-1}$ of f is adopted as this monotonically increasing function, it can be seen that a circuit that outputs 1 when $-\Delta E/T$ is larger than $f^{-1}(u)$ can be given. Moreover, since the temperature value T is positive, it can be seen that a circuit that outputs 1 when $-\Delta E$ is larger than $Tf^{-1}(u)$ may be sufficient.

The noise table 114b3 in FIG. 13 is a conversion table for achieving this inverse function $f^{-1}(u)$, and is a table that outputs a value of the following function to an input that discretizes the interval [0,1).

[Equation 7]

$$f_{metro}^{-1}(u) = \log(u) \qquad \text{Equation (3-1)}$$

[Equation 8]

$$f_{Gibbs}^{-1}(u) = \log\left(\frac{u}{1-u}\right) \qquad \text{Equation (3-2)}$$

The transition control unit 114 also includes a latch that holds a determination result and the like, a state machine that generates a timing thereof, and the like, but these are not illustrated in FIG. 13 for simplicity of illustration.

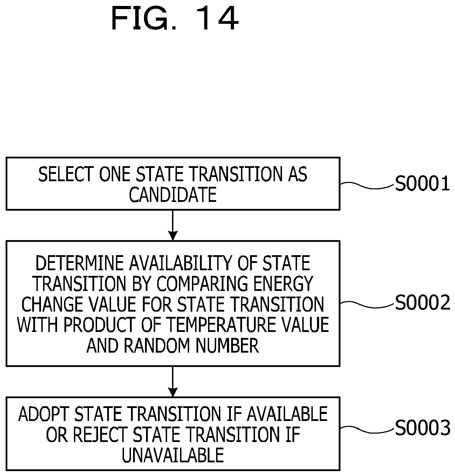

FIG. 14 is a diagram illustrating an exemplary operation flow of the transition control unit 114. The operation flow illustrated in FIG. 14 includes a step of selecting one state transition as a candidate (S0001), a step of determining availability of the state transition by comparing an energy change value for the state transition with a product of a temperature value and a random number value (S0002), and a step of adopting the state transition if the state transition is permitted, and not adopting the state transition if the state transition is not permitted (S0003).

(Optimization Method)

An optimization method disclosed in the present case includes a solution step of assigning a plurality of first bits to a first combinatorial optimization problem included in a plurality of combinatorial optimization problems and assigning a plurality of second bits to a second combinatorial optimization problem included in the plurality of combinatorial optimization problems among a plurality of bits for solving the plurality of combinatorial optimization problems, setting an interaction between each of the plurality of first bits and each of the plurality of second bits to zero, and solving the plurality of combinatorial optimization problems.

The optimization method disclosed in the present case can be performed by, for example, the optimization device disclosed in the present case. Furthermore, a suitable mode in the optimization method disclosed in the present case can be made similar to the suitable mode in the optimization device disclosed in the present case, for example.

(Optimization Program)

An optimization program disclosed in the present case causes a computer to perform processing of assigning a plurality of first bits to a first combinatorial optimization problem included in a plurality of combinatorial optimization problems and assigning a plurality of second bits to a second combinatorial optimization problem included in the plurality of combinatorial optimization problems among a plurality of bits for solving the plurality of combinatorial optimization problems, setting an interaction between each of the plurality of first bits and each of the plurality of second bits to zero, and solving the plurality of combinatorial optimization problems.

The optimization program disclosed in the present case can be, for example, a program that causes a computer to execute the optimization method disclosed in the present case. Furthermore, a suitable mode in the optimization program disclosed in the present case can be made similar to the suitable mode in the optimization device disclosed in the present case, for example.

The optimization program disclosed in the present case can be created using various known programming languages according to the configuration of a computer system to be used, the type and version of the operating system, and the like.

The optimization program disclosed in the present case may be recorded in a recording medium such as an internal hard disk or an external hard disk, or may be recorded in a recording medium such as a CD-ROM, DVD-ROM, MO disk, or USB memory.

Moreover, in a case of recording the optimization program disclosed in the present case in the above-described recording medium, the optimization program can be directly used or can be installed into a hard disk and then used through a recording medium reader included in the computer system as needed. Furthermore, the optimization program disclosed in the present case may be recorded in an external storage region (another computer or the like) accessible from the computer system through an information communication network. In this case, the optimization program disclosed in the present case, which is recorded in an external storage area, can be directly used or can be installed in a hard disk and then used from the external storage region through the information communication network as needed.

Note that the optimization program disclosed in the present case may be divided for each of any pieces of processing, and recorded in a plurality of recording media.

(Computer-Readable Recording Medium)

The computer-readable recording medium disclosed in the present case records the optimization program disclosed in the present case.

The computer-readable recording medium disclosed in the present case is not limited to any particular medium and can be appropriately selected according to the purpose. Examples of the computer-readable recording medium include a built-in hard disk, an external hard disk, a CD-ROM, a DVD-ROM, an MO disk, a USB memory, and the like.

Furthermore, the computer-readable recording medium disclosed in the present case may be a plurality of recording media in which the optimization program disclosed in the present case is divided and recorded for each of any pieces of processing.

[Embodiments]

Hereinafter, examples of the technology disclosed in the present case will be described. However, the technology disclosed in the present case is not limited to these examples.

(Example of Using Random Numbers for Bias and Weight)

<Embodiment 1>

As Embodiment 1, two combinatorial optimization problems were solved using random numbers (random integers) for the $b_i$ (bias) and $w_{ij}$ (weight) to be used for solving the individual combinatorial optimization problems in the Ising model of the above Equation (1), using an example of the optimization device disclosed in the present case. In Example 1, the two combinatorial optimization problems were solved by performing steps S103 to S106 in the flowchart in FIG. 11 using the optimization device having the functional configuration illustrated in FIG. 10. Furthermore, the digital annealer (registered trademark) was used for solving the combinatorial optimization problem (minimization of the Ising model Equation (1)).

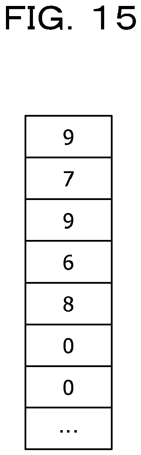

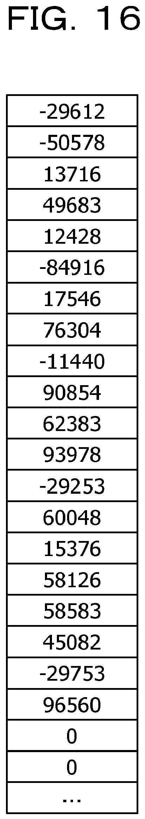

In Embodiment 1, a problem (A1) and a problem (A2) were solved as the two combinatorial optimization problems. In Example 1, the column of numerical values illustrated in FIG. 15 is the bi (bias) of the Ising model in the problem (A1), and the column of numerical values illustrated in FIG. 16 is the bi (bias) of the Ising model in the problem (A2). Note that FIGs. 15 and 16 illustrate the biases in vertical columns due to space limitations, but the way of illustration is not limited thereto. Furthermore, "..." indicates that the numerical value is "0" in the subsequent rows.

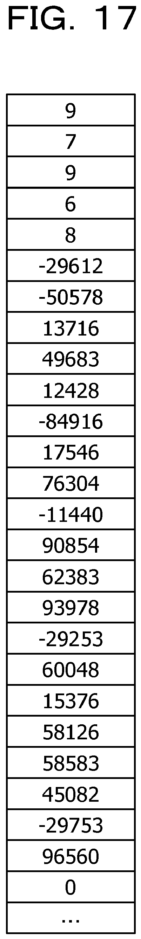

At this time, the bias (to be used for solving the two optimization problems) summarized from the bias of the problem (A1) illustrated in FIG. 15 and the bias of the problem (A2) illustrated in FIG. 16 is illustrated in FIG. 17.

Thus, in Embodiment 1, the biases in the problem (A1) and the problem (A2) were placed adjacent to each other. In other words, in Example 1, the bits are assigned such that the bits to be used for solving the combinatorial optimization problems different from each other are adjacent to each other.

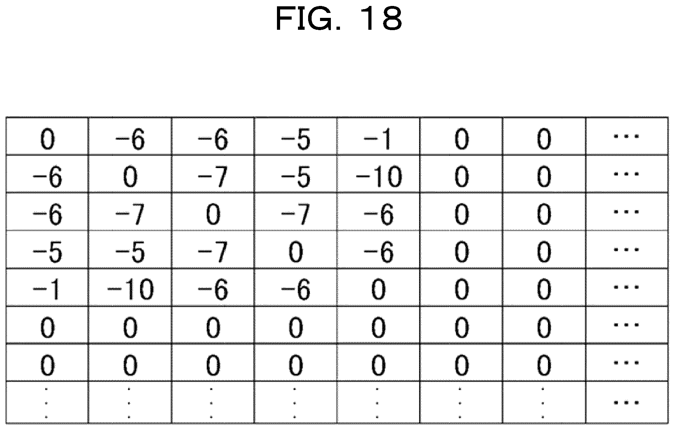

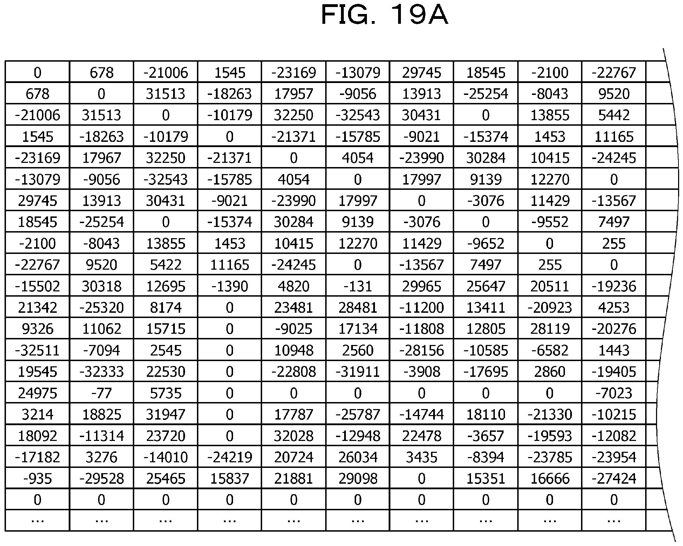

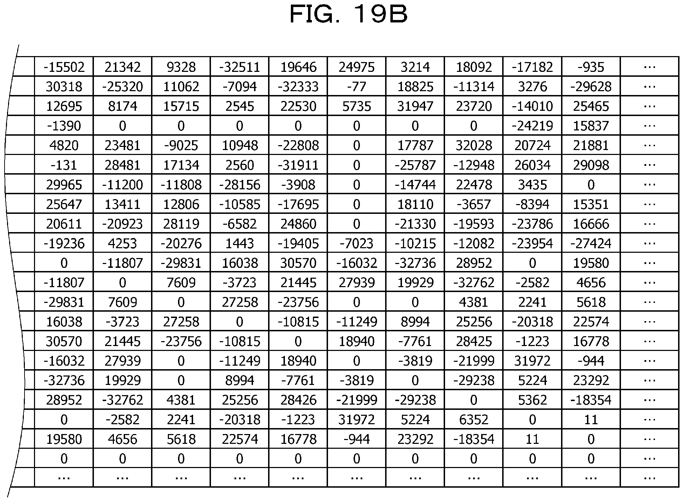

Furthermore, in Embodiment 1, the matrix illustrated in FIG. 18 was used as the $w_{ij}$ (weight) of the Ising model in the problem (A1), and the matrix illustrated in FIG. 19A and 19B was used as the $w_{ij}$ (weight) of the Ising model in the problem (A2).

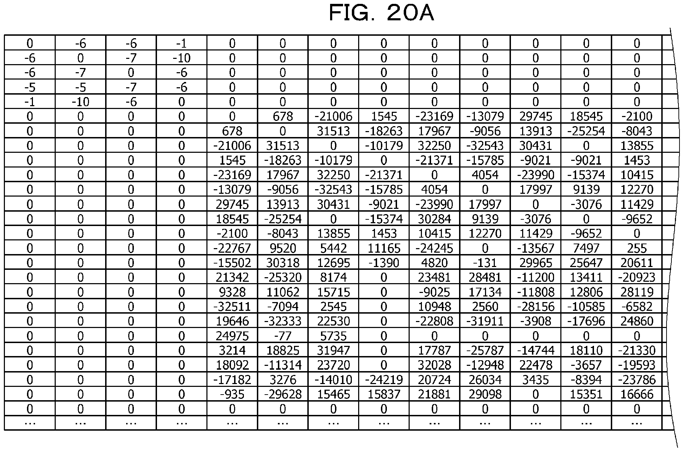

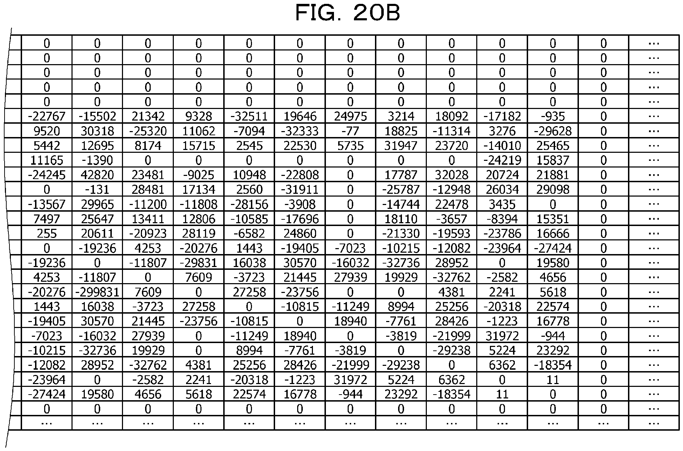

At this time, the weight (to be used for solving the two optimization problems) summarized from the weight of the problem (A1) illustrated in FIG. 18 and the weight of the problem (A2) illustrated in FIG. 19A and 19B is illustrated in FIG. 20A and 20B. As illustrated in FIG. 20A and 20B, in the weights to be used for solving the two optimization problems in the embodiment 1, the interaction (weight) between the bits t be used for solving the combinatorial optimization problems different from each other is zero.

In Embodiment 1, the annealing parameters were set to the conditions in which the problems (A1) and (A2) can be correctly solved, and the Ising model of the above Equation (1) was minimized based on the bias illustrated in FIG. 17 and the weight illustrated in FIG. 20A and 20B. Namely, in Embodiment 1, the two combinatorial optimization problems were solved based on the bias illustrated in FIG. 17 and the weight illustrated in FIG. 20A and 20B.

In Embodiment 1, when the Ising model of the above equation (1) was minimized based on the bias illustrated in FIG. 17 and the weight illustrated in FIG. 20A and 20B, the minimum value ($E_{min}$) of the Ising model of the above equation (1) was "-1081523". Furthermore, the calculation time needed for minimizing the Ising model of the above equation (1) was 0.9 seconds.

(Comparative Example 1)

In Comparative Example 1, the Ising model of the above Equation (1) was minimized similarly to Example 1 except that the problem (A1) and the problem (A2) were individually solved as two-time calculation as in Embodiment 1.

In Comparative Example 1, the bias of the problem (A1) illustrated in FIG. 15 and the weight of the problem (A1) illustrated in FIG. 18 were used for solving the problem (A1). Similarly, in Comparative Example 1, the bias of the problem (A2) illustrated in FIG. 16 and the weight of the problem (A2) illustrated in FIG. 19 were used for solving the problem (A2).

In Comparative Example 1, when the problem (A1) and the problem (A2) were individually solved, the minimum value of the Ising model of the above Equation (1) in the problem (A1) was "-16", and the minimum value of the Ising model of the above Equation (1) in the problem (A2) was "-1081507". Furthermore, the calculation time needed for minimizing the Ising model of the above Equation (1) was 0.9 seconds in each of the problem (A1) and the problem (A2), and was 1.8 seconds in total.

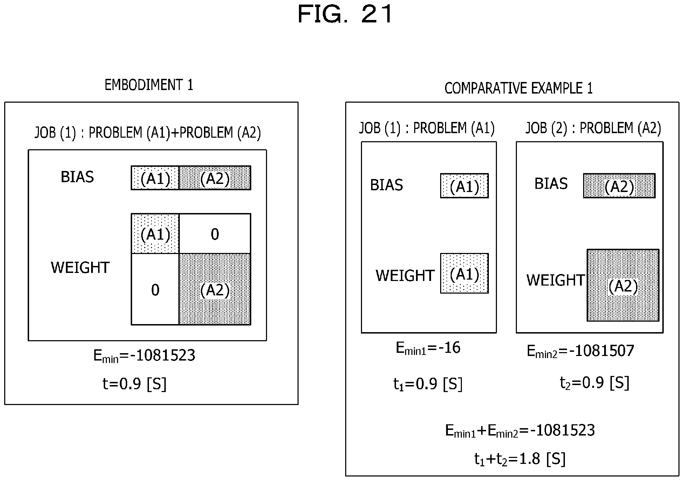

Here, FIG. 21 illustrates comparison of conditions and results between Embodiment 1 and Comparative Example 1. Note that, in FIG. 21, the minimum values of the Ising model in the respective examples are represented by "$E_{min}$", "$E_{min1}$", and "$E_{min2}$", and the calculation times in the respective examples are represented by "t", "$t_1$", and "$t_2$".

The minimum value "-1081507" of the Ising model in Embodiment 1 was a sum (total) of "-16" that is the result of individually minimizing the Ising model of the problem (A1) and "-1081507" that is the result of individually minimizing the Ising model of the problem (A2), in Comparative Example 1.

From the above point, it can be seen that the individual combinatorial optimization problems of the problems (A1) and (A2) were correctly solved in Embodiment 1.

Moreover, as illustrated in FIG. 21, in Embodiment 1, the calculation time was 0.9 seconds and the problem (A1) and the problem (A2) were solved in the calculation time that is half (1/2) the calculation time of 1.8 seconds of Comparative Example 1.

(Example of Problem of Calculating Similarity Between Molecules)

<Embodiment 2>

As Embodiment 2, a problem of calculating similarity between molecules (compounds) by solving combinatorial optimization problems was calculated. In Embodiment 2, two combinatorial optimization problems were solved by performing steps S101, and S103 to S106 in the flowchart in FIG. 11 using the optimization device having the functional configuration illustrated in FIG. 10, similarly to Embodiment 1. Furthermore, the digital annealer (registered trademark) was used for solving the combinatorial optimization problem (minimization of the Ising model).

<<Method for Calculating Similarity Between Molecules>>

Here, a method for calculating the similarity between molecules by solving the combinatorial optimization problems as in Embodiment 2 will be described.

As an example of the method for calculating the similarity between molecules, a method for searching for a partial substructure common to molecules (compounds) to be compared and solving a maximum independent set problem of a conflict graph will be described.

When calculating the similarity in structure between compounds by solving the maximum independent set problem in the conflict graph, the compounds are expressed as graphs. Here, to express a compound as a graph means to represent the structure of the compound using, for example, information on the types of atoms (element) in the compound and information on the bonding state between the respective atoms.

The structure of a compound can be represented using, for example, an expression in a MOL format or a structure data file (SDF) format. Usually, the SDF format means a single file obtained by collecting structural information on a plurality of compounds expressed in the MOL format. Furthermore, besides the MOL format structural information, the SDF format file is capable of treating additional information (for example, the catalog number, the Chemical Abstracts Service (CAS) number, the molecular weight, or the like) for each compound. Such a structure of the compound can be expressed as a graph in a comma-separated value (CSV) format in which, for example, "atom 1 (name), atom 2 (name), element information on atom 1, element information on atom 2, bond order between atom 1 and atom 2" are contained in a single row.

In the following, a method for creating the conflict graph will be described by taking a case of creating a conflict graph of acetic acid ($CH_3COOH$) and methyl acetate ($CH_3COOCH_3$) as an example.

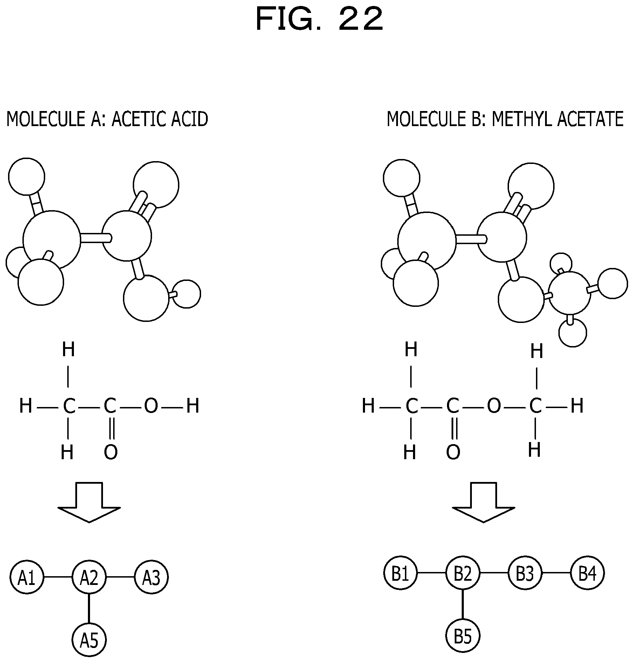

First, acetic acid (hereinafter sometimes referred to as "molecule A") and methyl acetate (hereinafter sometimes referred to as "molecule B") are expressed as graphs, and are given as illustrated in FIG. 22. In FIG. 22, atoms that form acetic acid are indicated by A1, A2, A3, and A5, and atoms that form methyl acetate are indicated by B1 to B5. Furthermore, in FIG. 22, A1, A2, B1, B2, and B4 indicate carbon, and A3, A5, B3, and B5 indicate oxygen, while a single bond is indicated by a thin solid line and a double bond is indicated by a thick solid line. Note that, in the example illustrated in FIG. 22, atoms other than hydrogen are selected and expressed as graphs, but when a compound is expressed as a graph, all atoms including hydrogen may be selected and expressed as a graph.

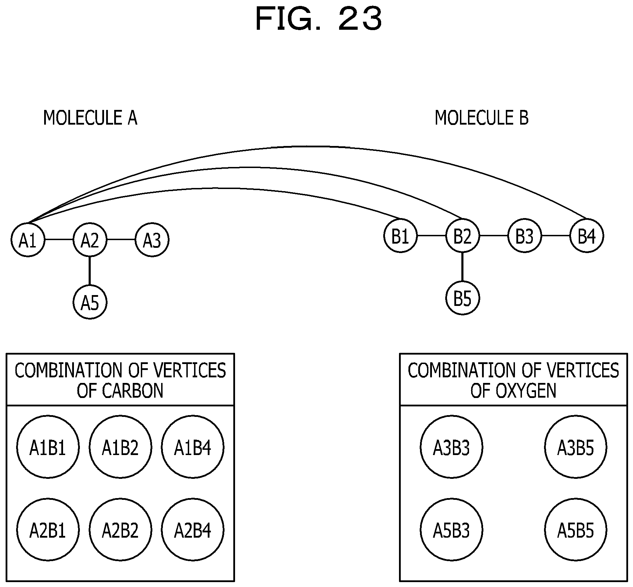

Next, the vertices (atoms) in the graphed molecules A and B are combined to create vertices (nodes) of the conflict graph. At this time, for example, as illustrated in FIG. 23, it is favorable to combine the same elements in the molecules A and B to create nodes of the conflict graph. In the example illustrated in FIG. 23, combinations of A1, A2, B1, B2, and B4 that represent carbon and combinations of A3, A5, B3, and B5 that represent oxygen are employed as nodes of the conflict graph. By setting the combinations of the same elements as nodes as described above, the conflict graph can be created using the nodes that can be included in the maximum independent set. Therefore, the number of nodes can be suppressed, and the number of bits of a computer needed for solving the maximum independent set problem can be reduced.

In the example in FIG. 23, six nodes are created by the combinations of carbons of the molecule A and carbons of the molecule B, and four nodes are created by the combinations of oxygens of the molecule A and oxygens of the molecule B. Therefore, the number of nodes in the conflict graph created from the graphed molecules A and B is ten.

Subsequently, edges (branches or sides) in the conflict graph are created. At this time, two nodes are compared, and when the nodes are constituted by atoms in different situations from each other (for example, the atomic number, the presence or absence of bond, the bond order, or the like), an edge is created between these two nodes. On the other hand, when two nodes are compared and the nodes are constituted by atoms in the same situation, no edge is created between these two nodes.

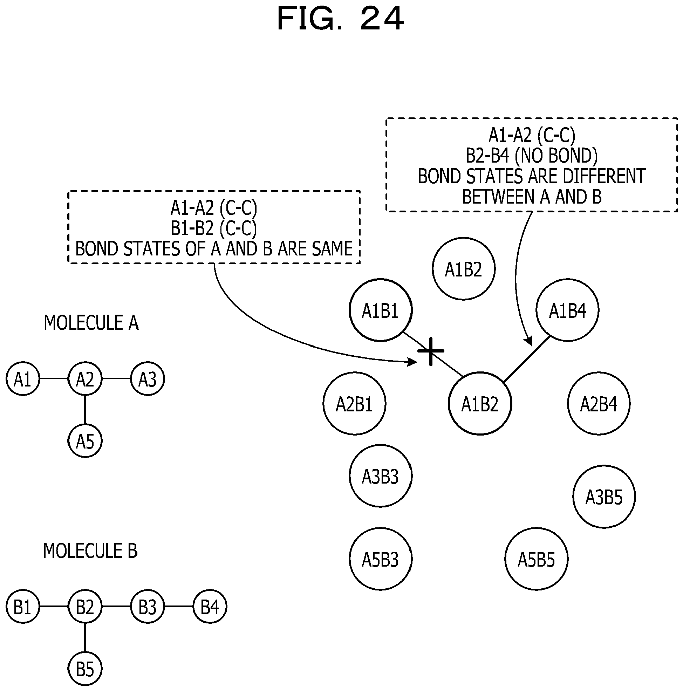

Here, a rule for creating the edge in the conflict graph will be described with reference to FIG. 24.

First, in the example illustrated in FIG. 24, whether or not to create an edge between the node [A1B1] and the node [A2B2] will be described. As can be seen from the structure of the graphed molecule A in FIG. 24, the carbon A1 of the molecule A included in the node [A1B1] and the carbon A2 of the molecule A included in the node [A2B2] are bonded (single bonded) to each other. Likewise, the carbon B1 of the molecule B included in the node [A1B1] and the carbon B2 of the molecule B included in the node [A2B2] are bonded (single bonded) to each other. For example, the situation of bonding between the carbons A1 and A2 and the situation of bonding between the carbons B1 and B2 are identical to each other.

In this manner, in the example in FIG. 24, the situation of the carbons A1 and A2 in the molecule A and the situation of the carbons B1 and B2 in the molecule B are identical to each other, and the nodes [A1B1] and [A2B2] are deemed as nodes constituted by atoms in identical situations to each other. Therefore, in the example illustrated in FIG. 24, no edge is created between the nodes [A1B1] and [A2B2].

Next, in the example illustrated in FIG. 24, whether or not to create an edge between the node [A1B4] and the node [A2B2] will be described. As can be seen from the structure of the graphed molecule A in FIG. 24, the carbon A1 of the molecule A included in the node [A1B4] and the carbon A2 of the molecule A included in the node [A2B2] are bonded (single bonded) to each other. On the other hand, as can be seen from the structure of the graphed molecule B, the carbon B4 of the molecule B included in the node [A1B4] and the carbon B2 of the molecule B included in the node [A2B2] have the oxygen B3 sandwiched between the carbons B4 and B2, and are not directly bonded. For example, the situation of bonding between the carbons A1 and A2 and the situation of bonding between the carbons B4 and B2 are different from each other.

Namely, in the example in FIG. 24, the situation of the carbons A1 and A2 in the molecule A and the situation of the carbons B4 and B2 in the molecule B are different from each other, and the nodes [A1B4] and [A2B2] are deemed as nodes constituted by atoms in different situations from each other. Therefore, in the example illustrated in FIG. 24, an edge is created between the nodes [A1B4] and [A2B2].

In this manner, the conflict graph can be created based on the rule that, when nodes are constituted by atoms in different situations, an edge is created between these nodes, and when nodes are constituted by atoms in the same situation, no edge is created between these nodes.

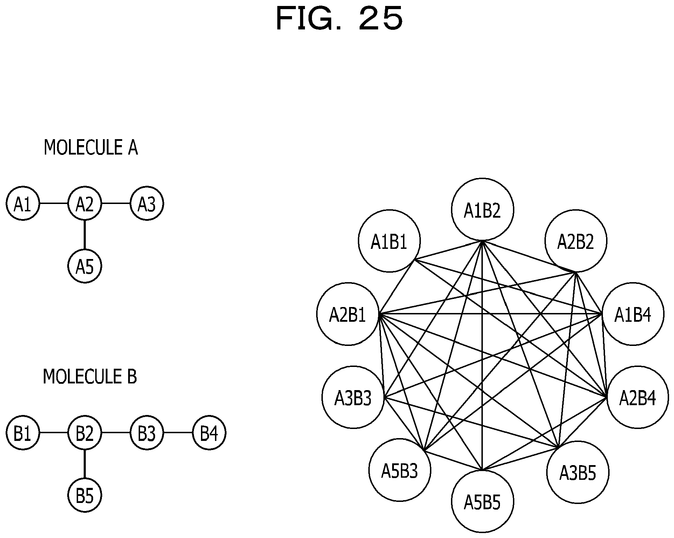

FIG. 25 is a diagram illustrating an exemplary conflict graph of the molecules A and B. As illustrated in FIG. 25, for example, in the nodes [A2B2] and [A5B5], the situation of bonding between the carbon A2 and the oxygen A5 in the molecule A and the situation of bonding between the carbons B2 and B5 in the molecule B are identical to each other. Therefore, the nodes [A2B2] and [A5B5] are deemed as nodes constituted by atoms in identical situations to each other, and thus no edge has been created between the nodes [A2B2] and [A5B5].

Here, the edge of the conflict graph can be created, for example, based on chemical structure data of two compounds for which the similarity in structure is to be computed. For example, when chemical structure data of compounds is input using an SDF format file, edges of the conflict graph can be created (specified) by performing calculations using a calculator such as a computer based on information contained in the SDF format file.

Next, a method for solving the maximum independent set problem of the created conflict graph will be described.

A maximum independent set (MIS) in the conflict graph means a set that includes the largest number of nodes that have no edges between the nodes among sets of nodes that constitute the conflict graph.

For example, the maximum independent set in the conflict graph means a set that has the maximum size (number of nodes) among sets formed by nodes that have no edges between the nodes with each other.

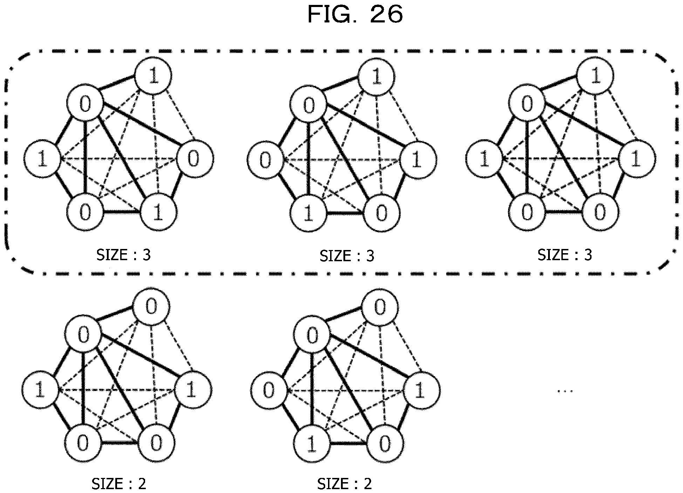

FIG. 26 is a diagram illustrating an exemplary maximum independent set in a graph. In FIG. 26, nodes included in a set are marked with a reference sign of "1", and nodes not included in any set are marked with a reference sign of "0"; for instances where edges are present between nodes, the nodes are connected by solid lines, and for instances where no edges are present, the nodes are connected by dotted lines. Note that, here, as illustrated in FIG. 26, a graph of which the number of nodes is six will be described as an example for simplification of explanation.

In the example illustrated in FIG. 26, among sets constituted by nodes that have no edges between the nodes, there are three sets having the maximum number of nodes, and the number of nodes in each of these sets is three. For example, in the example illustrated in FIG. 26, three sets surrounded by the one-dot chain line are given as the maximum independent sets in the graph.

Here, as described above, the conflict graph is created based on the rule that, when nodes are constituted by atoms in different situations, an edge is created between these nodes, and when nodes are constituted by atoms in the same situation, no edge is created between these nodes. Therefore, in the conflict graph, working out the maximum independent set, which is a set having the maximum number of nodes among sets constituted by nodes that have no edges between the nodes, is synonymous with working out the largest substructure among substructures common to two molecules. For example, the largest common substructure of two molecules can be specified by working out the maximum independent set in the conflict graph.

Thus, by expressing two molecules as graphs, creating a conflict graph based on the structures of the graphed molecules, and working out the maximum independent set in the conflict graph, the maximum common substructure of the two molecules can be worked out.

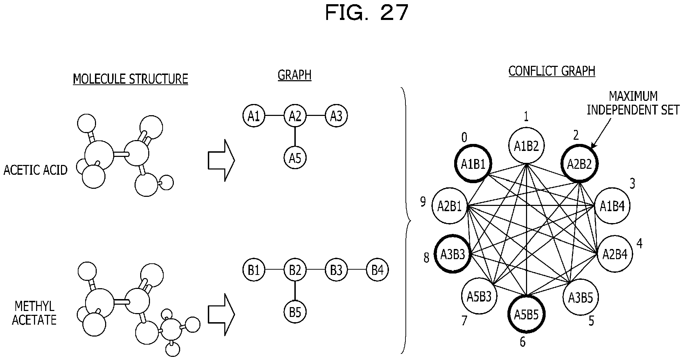

FIG. 27 illustrates an exemplary flow in a case where a maximum common substructure of the molecule A (acetic acid) and the molecule B (methyl acetate) is worked out (a maximum independent set problem is solved) by working out the maximum independent set in the conflict graph. As illustrated in FIG. 27, a conflict graph is created in such a manner that the molecules A and B are each expressed as a graph, the same elements are combined and employed as a node, and an edge is formed according to the situation of atoms constituting the node. Then, by working out the maximum independent set in the created conflict graph, the maximum common substructure of the molecules A and B can be worked out.

Here, an exemplary specific method for working out (searching for) the maximum independent set in the conflict graph will be described.

The search for the maximum independent set in the conflict graph can be performed, for example, by using a Hamiltonian in which minimizing means searching for the maximum independent set. More specifically, for example, the search can be performed by using a Hamiltonian (H) indicated by the following Equation (2). Note that Hamiltonian is an example of the cost function.

[Equation 9]

$$ H = -\alpha \sum_{i=0}^{n-1} b_i x_i + \beta \sum_{i,j=0}^{n-1} w_{ij} x_i x_j \qquad \text{... Equation (2)} $$

Here, in the above Equation (2), n represents the number of nodes in the conflict graph, and $b_i$ represents a numerical value representing a bias for the i-th node.

Moreover, $w_{ij}$ has a positive non-zero number when there is an edge between the i-th node and a j-th node, and has zero when there is no edge between the i-th node and the j-th node.

Furthermore, $x_i$ represents a binary variable representing that the i-th node has 0 or 1, and $x_j$ represents a binary variable representing that the j-th node has 0 or 1.

Note that $\alpha$ and $\beta$ are positive numbers.

The relationship between the Hamiltonian represented by the above Equation (2) and the search for the maximum independent set will be described in more detail. The above Equation (2) is a Hamiltonian representing the Ising model equation in the QUBO format.

In the above Equation (2), when $x_i$ has 1, it means that the i-th node is included in a set that is a candidate for the maximum independent set, and when xi has 0, it means that the i-th node is not included in a set that is a candidate for the maximum independent set. Likewise, in the above Equation (2), when $x_j$ has 1, it means that the j-th node is included in a set that is a candidate for the maximum independent set, and when xj has 0, it means that the j-th node is not included in a set that is a candidate for the maximum independent set.

Therefore, in the above Equation (1), by searching for a combination in which as many nodes as possible have the state of 1 under the constraint that there is no edge between nodes whose states are designated as 1 (bits are designated as 1), the maximum independent set can be searched.

Here, each term in the above Equation (2) will be described.

The first term on the right side of the above Equation (2) (the term with the coefficient of $-\alpha$) is a term whose value becomes smaller as the number of i whose $x_i$ has 1 is larger (the number of nodes included in a set that is a candidate for the maximum independent set is larger). Note that the value of the first term on the right side of the above Equation (2) becoming smaller means that a larger negative number is given. Thus, in the above Equation (2), the value of the Hamiltonian (H) becomes smaller when much nodes have the bit of 1, due to the action of the first term on the right side.

The second term on the right side of the above Equation (2) (the term with the coefficient of $\beta$) is a term of the penalty whose value becomes larger when there is an edge between nodes whose bits have 1 (when $w_{ij}$ has a positive non-zero number). For example, the second term on the right side of the above Equation (2) has 0 when there is no instance where an edge is present between nodes whose bits have 1, and has a positive number in other cases. Thus, in the above Equation (2), the value of the Hamiltonian (H) becomes larger when there is an edge between nodes whose bits have 1, due to the action of the second term on the right side.

As described above, the above Equation (2) has a smaller value when much nodes have the bit of 1, and has a larger value when there is an edge between the nodes whose bits have 1; accordingly, it can be said that minimizing the above Equation (1) means searching for the maximum independent set.

Here, the relationship between the Hamiltonian represented by the above Equation (2) and the search for the maximum independent set will be described using an example with reference to the drawings.

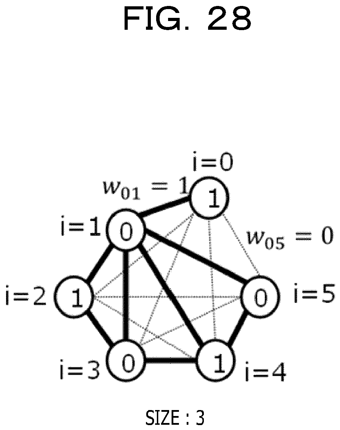

A case where the bit is set in each node as in the example illustrated in FIG. 28 in a graph of which the number nodes is six will be considered. In the example in FIG. 28, as in FIG. 26, for instances where edges are present between nodes, the nodes are connected by solid lines, and for instances where no edges are present, the nodes are connected by dotted lines.

For the example in FIG. 28, assuming in the above Equation (2) that bi has 1, and w$_{ij}$ has 1 when there is an edge between the i-th node and the j-th node, the above Equation (2) is as follows.

[Equation 10]

$$
\begin{aligned}
H &= -\alpha(x_0 + x_1 + x_2 + x_3 + x_4 + x_5) \\
&\quad + \beta(\lambda_{01}x_0x_1 + \lambda_{02}x_0x_2 + \lambda_{03}x_0x_3 + \lambda_{04}x_0x_4 + \lambda_{05}x_0x_5 + \cdots) \\
&= -\alpha(1 + 0 + 1 + 0 + 1 + 0) \\
&\quad + \beta(1*1*0 + 0*1*1 + 0*1*0 + 0*1*1 + 0*1*0 + \cdots) \\
&= -3\alpha
\end{aligned}
$$

In this manner, in the example in FIG. 28, when there is no instance where an edge is present between nodes whose bits have 1 (when there is no contradiction as an independent set), the second term on the right side has 0, and the value of the first term is given as the value of the Hamiltonian as it is.

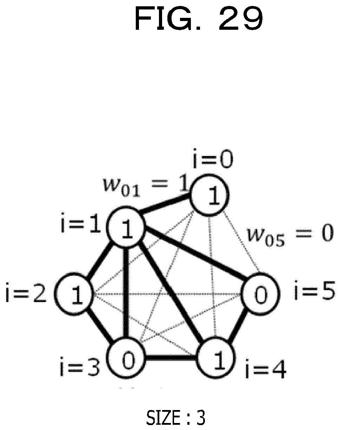

Next, a case where the bit is set in each node as in the example illustrated in FIG. 29 will be considered. As in the example in FIG. 28, assuming in the above equation (2) that bi has 1, and w$_{ij}$ has 1 when there is an edge between the i-th node and the j-th node, the above Equation (2) is as follows.

[Equation 11]

$$
\begin{aligned}
H &= -\alpha(x_0 + x_1 + x_2 + x_3 + x_4 + x_5) \\
&\quad + \beta(\lambda_{01}x_0x_1 + \lambda_{02}x_0x_2 + \lambda_{03}x_0x_3 + \lambda_{04}x_0x_4 + \lambda_{05}x_0x_5 + \cdots) \\
&= -\alpha(1 + \underline{1} + 1 + 0 + 1 + 0) \\
&\quad + \beta(1*1*\underline{1} + 0*1*1 + 0*1*0 + 0*1*1 + 0*1*0 + \cdots) \\
&= -4\alpha + 5\beta
\end{aligned}
$$

In this manner, in the example in FIG. 29, since there is an instance where an edge is present between nodes whose bits have 1, the second term on the right side does not have 0, and the value of the Hamiltonian is given as the sum of the two terms on the right side. Here, in the examples illustrated in FIGs. 28 and 29, for example, when α > 5β is assumed, -3α < -4α + 5β is satisfied, and accordingly, the value of the Hamiltonian in the example in FIG. 28 is smaller than the value of the Hamiltonian in the example in FIG. 29. In the example in FIG. 28, a set of nodes that has no contradiction as the maximum independent set is obtained, and it can be seen that the maximum independent set can be searched by searching for a combination of nodes in which the value of the Hamiltonian in the above Equation (2) becomes smaller.

Next, a method for computing the similarity in structure between molecules based on the searched maximum independent set will be described.

The similarity in structure between molecules can be computed, for example, using following Equation (3).

[Equation 12]

$$
S(G_A, G_B) = \delta \max\left\{\frac{|V_C^A|}{|V_A|}, \frac{|V_C^B|}{|V_B|}\right\} + (1 - \delta)\min\left\{\frac{|V_C^A|}{|V_A|}, \frac{|V_C^B|}{|V_B|}\right\}
$$

... Equation (3)

Here, in the above Equation (3), $S(G_A, G_B)$ represents the similarity between a first molecule expressed as a graph (for example, the molecule A) and a second molecule expressed as a graph (for example, the molecule B), is represented as 0 to 1, and means that the closer to 1, the higher the similarity.

Furthermore, $V_A$ represents the total number of node atoms of the first molecule expressed as a graph, and $V_c^A$ represents the number of node atoms included in the maximum independent set of the conflict graph among the node atoms of the first molecule expressed as a graph. Note that the node atom means an atom at the vertex of the graphed molecule.

Moreover, $V_B$ represents the total number of node atoms of the second molecule expressed as a graph, and $V_c^B$ represents the number of node atoms included in the maximum independent set of the conflict graph among the node atoms of the second molecule expressed as a graph.

The sign $\delta$ represents a number from 0 to 1.

In addition, in the above equation (3), max {A, B} means to select a larger value from among A and B, and min {A, B} means to select a smaller value from among A and B.

Here, as in FIG. 22 and other drawings, a method for computing the similarity will be described taking acetic acid (molecule A) and methyl acetate (molecule B) as examples.

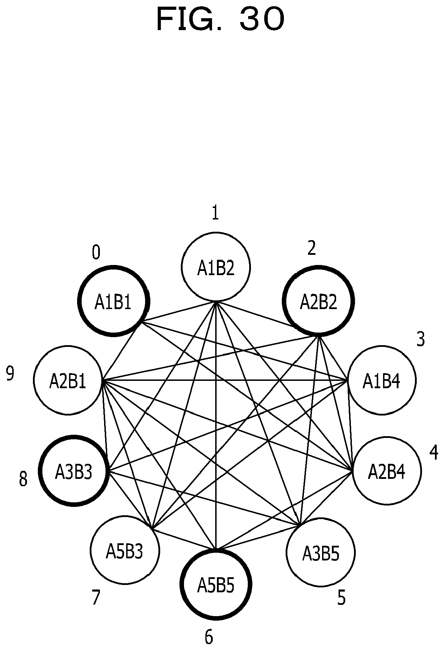

In the conflict graph illustrated in FIG. 30, the maximum independent set is constituted by four nodes: a node [A1B1], a node [A2B2], a node [A3B3], and a node [A5B5]. Thus, in the example in FIG. 30, $|V_A|$ is given as 4, $|V_c^A|$ is given as 4, $|V_B|$ is given as 5, and $|V_c^B|$ is given as 4. Furthermore, in this example, when it is assumed that $\delta$ has 0.5 and the average of the first molecule and the second molecule is taken (treated equally), the above Equation (3) is as follows.

[ Equation 13 ]

$$S(G_A, G_B) = 0.5 * \max\left\{\frac{4}{4}, \frac{4}{5}\right\} + (1 - 0.5) * \min\left\{\frac{4}{4}, \frac{4}{5}\right\}$$

$$= 0.5 * \frac{4}{4} + (1 - 0.5) * \frac{4}{5} = 0.9$$

In this manner, in the example in FIG. 30, the similarity in structure between the molecules is computed as 0.9 based on the above Equation (2).

As described above, by solving the combinatorial optimization problems and solving the maximum independent set problem of the conflict graph, the partial structure common to the molecules (compounds) to be compared is searched, and the similarity can be calculated.

<<Solving Problem (B1) and Problem (B2)>>

In Embodiment 2, two combinatorial optimization problems of problems (B1) and (B2) were solved as the combinatorial optimization problems to be solved. The problem (B1) was a problem of obtaining structural similarity between ethyl acetoacetate and 2-methoxybenzaldehyde. The problem (B2) was a problem of obtaining structural similarity between alanine (Ala)-glutamic acid (Glu) peptide and glutamic acid (Glu)-alanine (Ala) peptide.

In Embodiment 2, the above Equation (2) was used as the cost function (Hamiltonian), and the bi (bias) and $w_{ij}$ (weight) in the above Equation (2) were set based on information (graph) of the molecules for which similarity is obtained in the problems (B1) and (B2). Note that, since the cost function in the above Equation (2) is a function represented by the Ising model in the QUBO format, conversion into the Ising model was not performed.

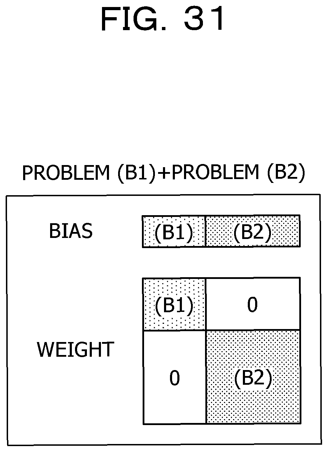

Furthermore, in Embodiment 2, the biases in the problems (B1) and (B2) were arranged adjacent to each other, as in FIG. 31. In Embodiment 2, as illustrated in FIG. 31, the weights in the problems (B1) and (B2) were made corresponding to the biases, and the weights between the bits to be used for solving the combinatorial optimization problems different from each other were set to zero.

In Embodiment 2, the annealing parameters were set to the conditions in which the problems (B1) and (B2) can be correctly solved, and the above Equation (2) was minimized.

When the above Equation (2) was minimized in Example 2, the minimum value ($E_{min}$) in the cost function (Hamiltonian) of the Ising model Equation (2) above was "-20070". Furthermore, the calculation time needed for minimizing the Ising model cost function of Equation (2) above was 0.9 seconds.

(Comparative Example 2)

In Comparative Example 2, the cost function of the above Ising model Equation (2) was minimized similarly to Example 2 except that the problems (B1) and (B2) were individually solved as two-time calculation as in Embodiment 2.

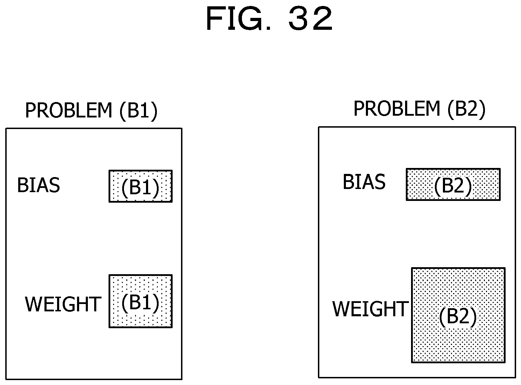

In Comparative Example 2, as illustrated in FIG. 32, the bias and weight in the problem (B1) and the bias and weight in the problem (B2) were individually set and each of the combinatorial optimization problems were individually solved.

In Comparative Example 2, when the problems (B1) and (B2) were individually solved, the minimum value of the cost function of the Ising model equation (2) above in the problem (B1) was "-20000". Furthermore, the minimum value of the cost function of the Ising model equation (2) above in the problem (B2) was "-70". Furthermore, the calculation time needed for minimizing the cost function of the Ising model Equation (2) above was 0.9 seconds in each of the problems (B1) and (B2), and was 1.8 seconds in total.

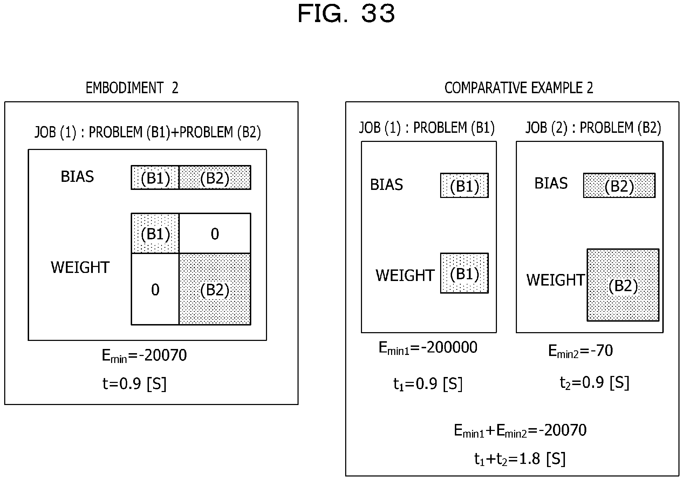

Here, FIG. 33 illustrates comparison of conditions and results between Embodiment 2 and Comparative Example 2. Note that, in FIG. 33, the minimum values of the Ising model in the respective examples are represented by "$E_{min}$", "$E_{min1}$", and "$E_{min2}$", and the calculation times in the respective examples are represented by "t", "$t_1$", and "$t_2$".

The minimum value "-20070" of the Ising model in Embodiment 2 was a sum (total) of "-20000" that is the result of individually minimizing the Ising model of the problem (B1) and "-70" that is the result of individually minimizing the Ising model of the problem (B2), in Comparative Example 2.

From the above point, it can be seen that in Embodiment 2, the individual combinatorial optimization problems of the problems (B1) and (B2) were correctly solved.

Moreover, as illustrated in FIG. 33, in Embodiment 2, the calculation time was 0.9 seconds and the problems (B1) and (B2) were solved in the calculation time that is half (1/2) the calculation time of 1.8 seconds of Comparative Example 2.

Here, in Embodiment 2, ethyl acetoacetate in the problem (B1) is $X_1$, 2-methoxybenzaldehyde is $Y_1$, the number of atoms of the molecule $X_1$ is $nX_1$, and the number of atoms of the molecule $Y_1$ is $nY_1$. Similarly, in Embodiment 2, the Ala-Glu peptide in the problem (B2) is $X_2$, the Glu-Ala peptide is $Y_2$, the number of atoms of the molecule $X_2$ is $nX_2$, and the number of atoms of the molecule $Y_2$ is $nY_2$.

In the present case, the number of bits with the state of "1" in the range of the bits assigned for solving the problem (B1) when the problems (B1) and (B2) were solved at once is equal to the number of maximum common partial structures of the problem (B1) (the number of atoms common between the molecules) $nX_1Y_{1\,common}$. Similarly, the number of bits with the state of "1" in the range of the bits assigned for solving the problem (B2) is equal to the number of maximum common partial structures of the problem (B2) (the number of atoms common between the molecules) $nX_2Y_{2\,common}$.

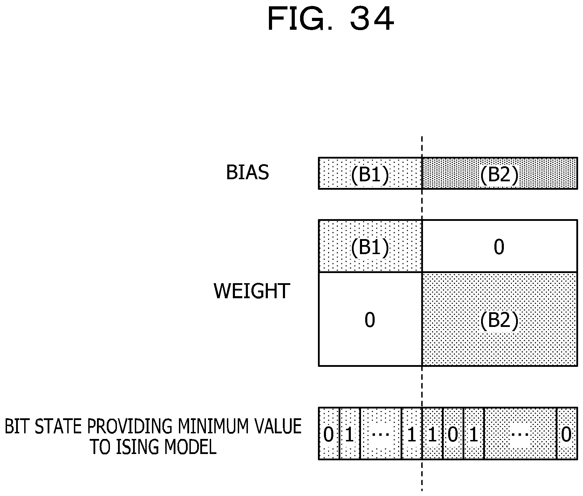

For example, as illustrated in FIG. 34, information of the state of the bits assigned to the solution of the problems (B1) and (B2) can be obtained by solving the problems (B1) and (B2) at once. Therefore, by solving the problems (B1) and (B2) at once, the bit state in each problem can be obtained, and how many bits with the state of "1" are present in the range of the bis assigned to each problem can be obtained based on the bit state. Therefore, in Example 2, the number of maximum common partial structures in the problems (B1) and (B2) can be specified, and the similarity between molecules can be calculated for each problem.

When the similarities between molecules calculated in Embodiment 2 and Comparative Example 2 were compared, the similarity of the problem (B1) calculated in Embodiment 2 matched the similarity of the problem (B1) calculated in Comparative Example 2. Furthermore, the similarity of the problem (B2) calculated in Embodiment 2 also matched the similarity of the problem (B2) calculated in Comparative Example 2.

(Example of Solving Knapsack Problem)

<Embodiment 3>

As Embodiment 3, a knapsack problem was solved by solving combinatorial optimization problems. In Embodiment 3, two combinatorial optimization problems were solved by performing steps S101 to S106 in the flowchart in FIG. 11 using the optimization device having the functional configuration illustrated in FIG. 10, similarly to Embodiment 1. Furthermore, the digital annealer (registered trademark) was used for solving the combinatorial optimization problem (minimization of the Ising model of the Equation (1)).

<<Knapsack Problem>>

Here, a knapsack problem is a problem of finding a combination of items that maximizes a total value of the items put in a knapsack in a case of packing a plurality of types of items each having a predetermined value in the knapsack. In the knapsack problem, the weight (or volume) of the items that can be put in the knapsack is determined, and there is a restriction that a total weight (or volume) of the put items does not exceed a capacity of the knapsack.

An example of the cost function (Hamiltonian (H)) that can solve the knapsack problem includes the following Equation (4).

[Equation 14]

$$H = -V + P_{item} + P_{knapsack}$$

... Equation (4)

Here, V in the above Equation (4) means a total value of the items put in the knapsack. For example, V in the above Equation (4) can be expressed by the following equation.

[Equation 15]

$$V = \sum_{i=0}^{n-1} v_i \sum_{j=0}^{m-1} x_{i,j}$$

Here, n means the number of items, m means the number of knapsacks, and $v_i$ means the value of an item i. Furthermore, $x_{i,j}$ is a binary variable that means whether the item i is contained in a knapsack j and is 0 or 1.

$P_{item}$ in the above Equation (4) means a constraint regarding the number of items, such as an item being not put in any knapsack or being put in any knapsack. For example, the $P_{item}$ in the above Equation (4) can be expressed by the following equation.

[Equation 16]

$$P_{item} = \sum_{i=0}^{n-1} \beta \left( \sum_{j=0}^{m-1} x_{i,j} \right) \left( \left( \sum_{j=0}^{m-1} x_{i,j} \right) - 1 \right)$$

Here, $\beta$ is a parameter (coefficient) and can be, for example, 1000.

$P_{knapsack}$ in the above Equation (4) means a constraint regarding the capacity of the knapsack, such as the weight of the item that can be put in the knapsack being less than or equal to the capacity of the knapsack. For example, $P_{knapsack}$ in the above Equation (4) can be expressed by the following equation.

[Equation 17]

$$P_{knapsack} = \sum_{j=0}^{m-1} \left( \alpha \left( C_j - y_j - \sum_{i=0}^{n-1} w_i x_{i,j} \right)^2 \right)$$

Here, $\alpha$ is a parameter (coefficient), $C_j$ means the capacity of the knapsack j, $w_i$ means the weight of the item i, and $y_j$ means a slack variable. Furthermore, the parameter $\alpha$ can be set to 1, for example.

For example, the slack variable yi can be expressed by the following equation.

[Equation 18]

$$y_j = \sum_{k=0}^{l-1} 2^k y_{j,k}$$

Furthermore, the slack variable yi is an integer value in a range of $[0,2^l-1]$. Here, I (L) can be expressed by the following equation.

[Equation 19]

$$w_{max} = \max(w_i) , l = [\log_2(w_{max} + 1)]$$

Furthermore, $P_{knapsack}$ in the above Equation (4) can be obtained by converting the capacity $C_j$ of the knapsack j from an inequality to an equation using the slack variable $y_i$. The conversion of the capacity $C_j$ of the knapsack j from an inequality to an equation can be performed by modifying the following three equations.

[Equation 20]

$$\sum_{i=0}^{n-1} w_i x_{i,j} \le C_j$$

[Equation 21]

$$\sum_{i=0}^{n-1} w_i x_{i,j} + y_j = C_j$$

[Equation 22]

$$C_j - y_j - \sum_{i=0}^{n-1} w_i x_{i,j} = 0$$

<<Solving Problem (C1) and Problem (C2)>>

In Embodiment 3, two combinatorial optimization problems of problems (C1) and (C2) were solved as the combinatorial optimization problems to be solved.

The problem (C1) is a knapsack problem in a case of packing 10 types of items into 3 knapsacks. In the problem (C1), the values of the respective items i were $(v_0, v_1, v_2, v_3, v_4, v_5, v_6, v_7, v_8, v_9)$ = (4, 2, 7, 4, 6, 9, 4, 8, 2, 3). Furthermore, in the problem (C1), the weights of the respective items i were $(w_0, w_1, w_2, w_3, w_4, w_5, w_6, w_7, w_8, w_9)$ = (4, 8, 3, 7, 9, 2, 1, 6, 8, 9). Moreover, in the problem (C1), the capacities of the knapsack j were each set to $(C_0, C_1, C_2)$ = (12, 18, 26).

The problem (C2) is a knapsack problem in a case of packing 10 types of items into two knapsacks. In the problem (C2), the values of the respective items i were $(v_0, v_1, v_2, v_3, v_4, v_5, v_6, v_7, v_8, v_9)$ = (1, 2, 3, 2, 5, 6, 9, 7, 4, 8).

Furthermore, in the problem (C2), the weights of the respective items i were ($w_0$, $w_1$, $w_2$, $w_3$, $w_4$, $w_5$, $w_6$, $w_7$, $w_8$, $w_9$) = (1, 9, 7, 1, 5, 8, 6, 5, 9, 8). Moreover, in the problem (C2), the capacities of the knapsack j were each set to ($C_0$, $C_1$) = (14, 22).

In Embodiment 3, the above Equation (4) was used as the cost function (Hamiltonian). Then, the above Equation (4) was converted into the Ising model of the above Equation (1) and the $b_i$ (bias) and $w_{ij}$ (weight) were set based on the conditions of the above problems (C1) and (C2).

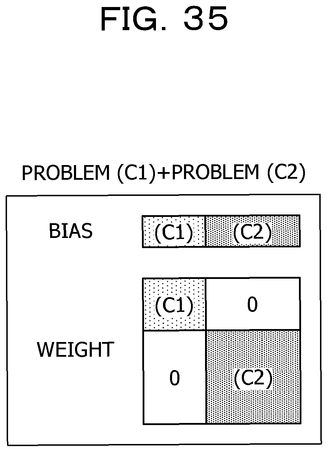

Furthermore, in Embodiment 3, the biases in the problems (C1) and (C2) were arranged adjacent to each other, as in FIG. 35. In Embodiment 3, as illustrated in FIG. 35, the weights in the problems (C1) and (C2) were made corresponding to the biases, and the weights between the bits to be used for solving the combinatorial optimization problems different from each other were set to zero.

In Embodiment 3, the annealing parameters were set to the conditions in which the problems (C1) and (C2) can be correctly solved, and the above Equation (1) was minimized.

When the Ising model of the above Equation (1) was minimized in Embodiment 2, the minimum value ($E_{min}$) in the Ising model of the above Equation (1) was "-1910". Furthermore, the calculation time needed for minimizing the Ising model of the above Equation (1) was 8.4 seconds.

(Comparative Example 3)

In Comparative Example 3, the Ising model of the above equation (1) was minimized similarly to Example 3 except that the problems (C1) and (C2) were individually solved as two-time calculation as in Example 3.

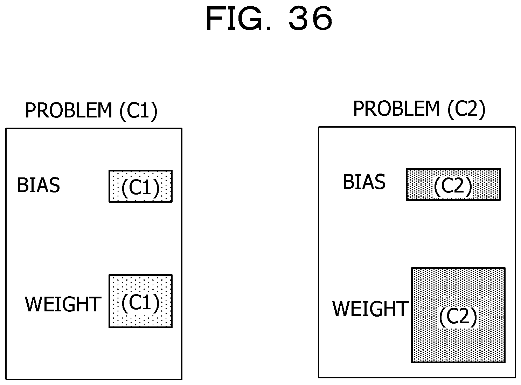

In Comparative Example 3, as illustrated in FIG. 36, the bias and weight in the problem (C1) and the bias and weight in the problem (C2) were individually set and each of the combinatorial optimization problems were individually solved.

In Comparative Example 3, when the problems (C1) and (C2) were individually solved, the minimum value of the Ising model of the above Equation (1) in the problem (C1) was "-1192". Moreover, the minimum value of the Ising model of the above Equation (1) in the problem (C2) was "-718". Furthermore, the calculation time needed for minimizing the Ising model of the above Equation (1) was 8.4 seconds in each of the problem (C1) and the problem (C2), and was 16.8 seconds in total.

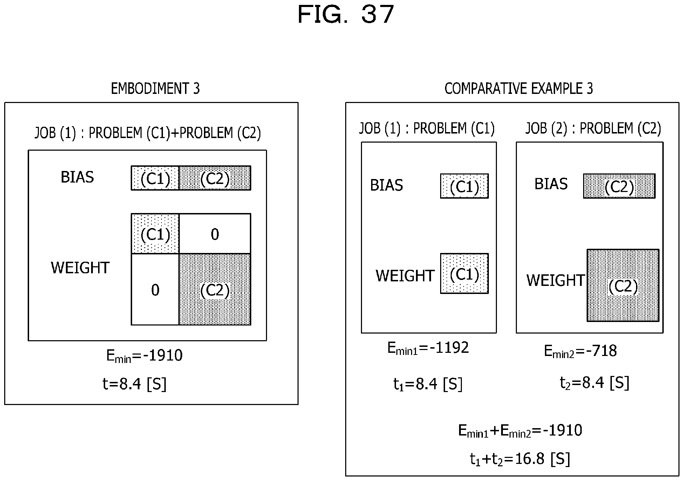

Here, FIG. 37 illustrates comparison of conditions and results between Embodiment 3 and Comparative Example 3. Note that, in FIG. 37, the minimum values of the Ising model in the respective examples are represented by "$E_{min}$", "$E_{min1}$", and "$E_{min2}$", and the calculation times in the respective examples are represented by "t", "$t_1$", and "$t_2$".

The minimum value "-1910" of the Ising model in Example 3 was a sum (total) of "-1192" that is the result of individually minimizing the Ising model of the problem (C1) and "-718" that is the result of individually minimizing the Ising model of the problem (C2), in Comparative Example 3.

From the above point, it can be seen that the individual combinatorial optimization problems of the problems (C1) and (C2) were correctly solved in Embodiment 3.

Moreover, as illustrated in FIG. 37, in Embodiment 3, the calculation time was 8.4 seconds and the problems (C1) and (C2) were solved in the calculation time that is half (1/2) the calculation time of 16.8 seconds of Comparative Example 3.

(Example Where Plurality of Combinatorial Optimization Problems Includes Different Types of Combinatorial Optimization Problems)

<Embodiment 4>

In Embodiment 4, a plurality of combinatorial optimization problems was solved in the case where the plurality of combinatorial optimization problems includes different types of combinatorial optimization problems. In Embodiment 4, three combinatorial optimization problems were solved by performing steps S101 to S106 in the flowchart in FIG. 11 using the optimization device having the functional configuration illustrated in FIG. 10, similarly to Embodiment 1. Furthermore, the digital annealer (registered trademark) was used for solving the combinatorial optimization problem (minimization of the Ising model of the Equation (1)).

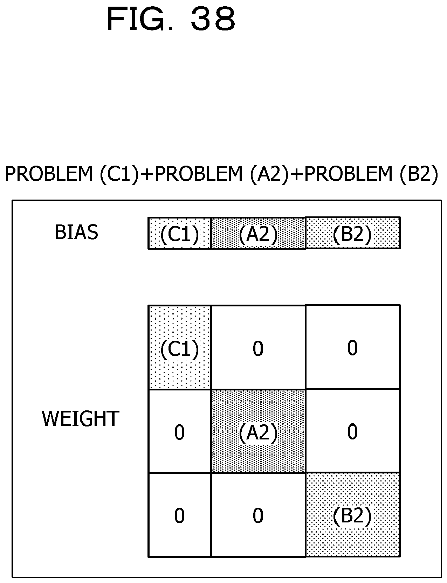

In Embodiment 4, the three combinatorial optimization problems of the problem (A2) in Embodiment 1, the problem (B2) in Embodiment 2, and the problem (C1) in Embodiment 3 were solved. In Embodiment 4, the bi (bias) and $w_{ij}$ (weight) of the Ising model in the above problems (A2), (B2), and (C1) were set as illustrated in FIG. 38. In Embodiment 4, as illustrated in FIG. 38, the weights in the above problems (A2), (B2), and (C1) were made corresponding to the biases, and the weights between the bits to be used for solving the combinatorial optimization problems different from each other were set to zero.

In Embodiment 4, the annealing parameters were set to the conditions in which the problem (C1), which is the problem most difficult to solve among the above problems (A2), (B2), and (C1), can be correctly solved, and the above Equation (1) was minimized.

When the Ising model of the above Equation (1) was minimized in Embodiment 4, the minimum value ($E_{min}$) in the Ising model of the above Equation (1) was "-1082769". Furthermore, the calculation time needed for minimizing the Ising model of the above Equation (1) was 8.4 seconds.

(Comparative Example 4)

In Comparative Example 4, the Ising model of the above Equation (1) was minimized similarly to Embodiment 4 except that the above problems (A2), (B2), and (C1) were individually solved as three-time calculation as in Embodiment 4.

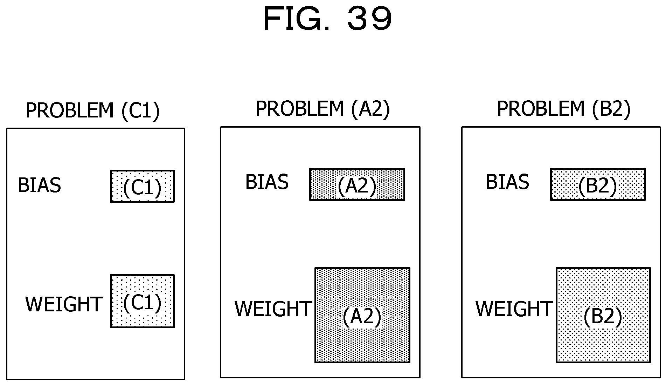

In Comparative Example 4, as illustrated in FIG. 39, the bias and weight in the problem (A2), the bias and weight in the problem (B2), and the bias and were in the problem (C1) were individually set and each of the combinatorial optimization problems were individually solved.

In Comparative Example 4, when the problems (A2), (B2), and (C1) were individually solved, the minimum value of the Ising model of the above Equation (1) in the problem (A2) was "-1081507". Furthermore, the minimum value of the Ising model of the above Equation (1) in the problem (B2) was "-70". Moreover, the minimum value of the Ising model of the above Equation (1) in the problem (C1) was "-1192". Furthermore, the calculation time needed for minimizing the Ising model of the above Equation (1) was 0.9 seconds in the problem (A2), 0.9 seconds in the problem (B2), and 8.4 seconds in the problem (C1), and was 10.2 seconds in total.

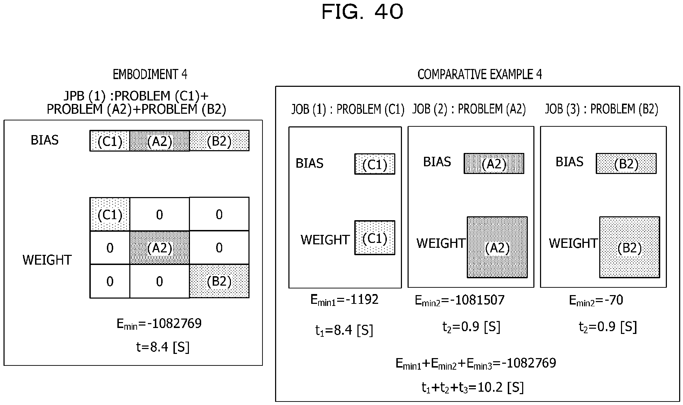

Here, FIG. 40 illustrates a comparison of conditions and results between Embodiment 4 and Comparative Example 4. Note that, in FIG. 40, the minimum values of the Ising model in the respective examples are represented by "$E_{min}$", "$E_{min1}$", "$E_{min2}$", and "$E_{min3}$", and the calculation times in the respective examples are represented by "t", "$t_1$", "$t_2$", and "$t_3$".

The minimum value "-1082769" of the Ising model in Example 4 was a sum (total) of "-1081507" that is the result of individually minimizing the Ising model of the problem (A2), "-70" that is the result of individually minimizing the Ising model of the problem (B2), and "-1192" that is the result of individually minimizing the Ising model of the problem (C1), in Comparative Example 4.

From the above point, it can be seen that the individual combinatorial optimization problems of the problems (A2), (B2), and (C1) were correctly solved in Example 4.

Moreover, as illustrated in FIG. 40, in Embodiment 4, the calculation time was 8.4 seconds and can be made shorter than 10.2 seconds that is the calculation time of Comparative Example 4. In Embodiment 4, the calculation time for solving the plurality of combinatorial optimization problems was the same as the calculation time needed for solving the most difficult problem (C1).

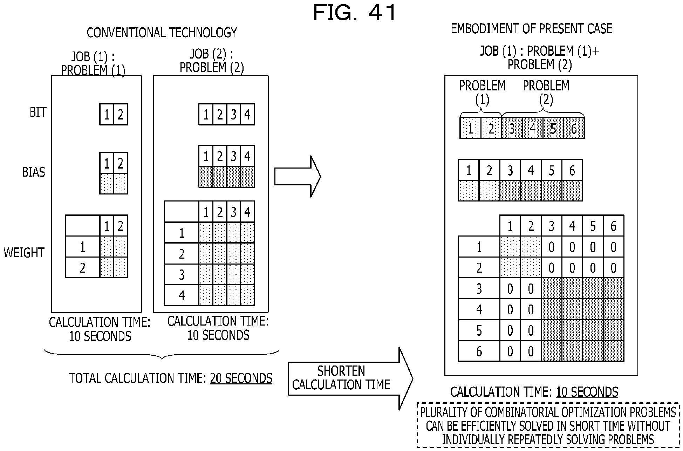

FIG. 41 is a diagram illustrating an example of a relationship when solving a plurality of combinatorial optimization problems between one embodiment of the technology disclosed in the present case and the conventional technology.

As illustrated in FIG. 41, in the conventional technology, when solving a plurality of combinatorial optimization problems, the combinatorial optimization problems are sequentially solved by individually repeatedly solving each of the combinatorial optimization problems (problems (1) and (2)). Therefore, as illustrated in FIG. 41, in the conventional technology, in the case where the calculation time for solving the individual combinatorial optimization problem is ten seconds, each of job (1) for solving the problem (1) and job (2) for solving the problem (2) takes ten seconds, and thus the total calculation time is twenty seconds.

Meanwhile, in the embodiment of the technology disclosed in the present case, as illustrated in FIG. 41, the bits to be used for solving the individual combinatorial optimization problems in the two combinatorial optimization problems of the problems (1) and (2) are assigned to the prepared bits. Namely, in the embodiment of the technology disclosed in the present case, the plurality of first bits is assigned to the first combinatorial optimization problem included in the plurality of combinatorial optimization problems, and the plurality of second bits is assigned to the second combinatorial optimization problem included in the plurality of combinatorial optimization problems.

Moreover, in the embodiment of the technology disclosed in the present case, as illustrated in FIG. 41, the interaction (weight) between the bits to be used for solving the combinatorial optimization problems different from each other in the two combinatorial optimization problems of the problems (1) and (2) is set to zero. Namely, in the example of the technology disclosed in the present case, the interaction between each of the plurality of first bits and each of the plurality of second bits is set to zero.

Then, in the embodiment of the technology disclosed in the present case, the plurality of combinatorial optimization problems is collectively solved (as one job) based on the conditions set as described above.

By doing so, in the embodiment of the technology disclosed in the present case, in the example illustrated in FIG. 41, when solving the problems (1) and (2) each taking ten seconds for solution, the problems (1) and (2) can be collectively solved and the total calculation time can be ten seconds. Namely, in the embodiment of the technology disclosed in the present case, the calculation time needed for solving the plurality of combinatorial optimization problems can be halved in the example illustrated in FIG. 41.

As described above, in the embodiment of the technology disclosed in the present case, the plurality of combinatorial optimization problems can be solved in a short time without individually repeating solving the problems.

**Claims**

1. An optimization device comprising:

   a solution unit configured to:

   among a plurality of bits for solving a plurality of combinatorial optimization problems, assign a plurality of first bits to a first combinatorial optimization problem included in the plurality of combinatorial optimization problems and assign a plurality of second bits to a second combinatorial optimization problem included in the plurality of combinatorial optimization problems,
   set an interaction between each of the plurality of first bits and each of the plurality of second bits to zero, and solve the plurality of combinatorial optimization problems.

2. The optimization device according to claim 1, wherein the first combinatorial optimization problem and the second combinatorial optimization problem are combinatorial optimization problems of a same type as each other or different types from each other.

3. The optimization device according to claim 1 or 2, wherein the plurality of second bits is adjacent to the plurality of first bits in the plurality of bits.

4. The optimization device according to claim 1 or 2, wherein
   the solution unit solves the plurality of combinatorial optimization problems based on a cost function, and
   the cost function is a function defined to have: an interaction between respective bits included in the plurality of first bits become an integer, and
   an interaction between respective bits included in the plurality of second bits become an integer.

5. The optimization device according to claim 4, wherein the solution unit solves the plurality of combinatorial optimization problems based on the cost function converted into an Ising model expressed by a following equation :

$$E = - \sum_{i,j=0} w_{ij} x_i x_j - \sum_{i=0} b_i x_i$$

where

   the E is the cost function that means minimizing the E solves the plurality of combinatorial optimization problems,
   the $w_{ij}$ is a numerical value representing the interaction between the i-th bit and the j-th bit,
   the $b_i$ is a numerical value representing a bias with respect to the i-th bit,
   the $x_i$ is a binary variable representing that the i-th bit is 0 or 1, and
   the $x_j$ is a binary variable representing that the j-th bit is 0 or 1.

6. The optimization device according to claim 1 or 2, wherein the solution unit solves the plurality of combinatorial optimization problems by an annealing method.

7. The optimization device according to claim 1 or 2, wherein the plurality of combinatorial optimization problems is a similarity search among a plurality of molecules.

8. An optimization program that executed by an optimization device, the optimization program comprising:

   among a plurality of bits for solving a plurality of combinatorial optimization problems, assigning a plurality of first bits to a first combinatorial optimization problem included in the plurality of combinatorial optimization problems and assigning a plurality of second bits to a second combinatorial optimization problem included in the plurality of combinatorial optimization problems,
setting an interaction between each of the plurality of first bits and each of the plurality of second bits to zero, and
solving the plurality of combinatorial optimization problems.

**9.** The optimization program according to claim 8, wherein the first combinatorial optimization problem and the second combinatorial optimization problem are combinatorial optimization problems of a same type as each other or different types from each other.

**10.** The optimization program according to claim 8 or 9, wherein the plurality of second bits is adjacent to the plurality of first bits in the plurality of bits.

**11.** The optimization program according to claim 8 or 9, wherein
the solving includes solving the plurality of combinatorial optimization problems based on a cost function, and
the cost function is a function defined to have: an interaction between respective bits included in the plurality of first bits become an integer, and
an interaction between respective bits included in the plurality of second bits become an integer.

**12.** The optimization program according to claim 11, wherein the solving includes solving the plurality of combinatorial optimization problems based on the cost function converted into an Ising model expressed by a following equation:

$$E = -\sum_{i,j=0} w_{ij} x_i x_j - \sum_{i=0} b_i x_i$$

where

the E is the cost function that means minimizing the E solves the plurality of combinatorial optimization problems,
the $w_{ij}$ is a numerical value representing the interaction between the i-th bit and the j-th bit,
the $b_i$ is a numerical value representing a bias with respect to the i-th bit,
the $x_i$ is a binary variable representing that the i-th bit is 0 or 1, and
the $x_j$ is a binary variable representing that the j-th bit is 0 or 1.

**13.** An optimization method comprising:

among a plurality of bits for solving a plurality of combinatorial optimization problems, assigning a plurality of first bits to a first combinatorial optimization problem included in the plurality of combinatorial optimization problems and assigning a plurality of second bits to a second combinatorial optimization problem included in the plurality of combinatorial optimization problems,
setting an interaction between each of the plurality of first bits and each of the plurality of second bits to zero, and
solving the plurality of combinatorial optimization problems.

**14.** The optimization method according to claim 13, wherein the first combinatorial optimization problem and the second combinatorial optimization problem are combinatorial optimization problems of a same type as each other or different types from each other.

**15.** The optimization method according to claim 13 or 14, wherein
the solving includes solving the plurality of combinatorial optimization problems based on a cost function, and
the cost function is a function defined to have:

an interaction between respective bits included in the plurality of first bits become an integer, and
an interaction between respective bits included in the plurality of second bits become an integer.

# FIG. 1

# FIG. 2

JOB (1) : PROBLEM (1)　　　　JOB (2) : PROBLEM (2)　　　　JOB (3) : PROBLEM (1)

CALCULATION TIME:
ONE SECOND

CALCULATION TIME:
ONE SECOND

CALCULATION TIME:
ONE SECOND

TOTAL CALCULATION TIME: THREE SECONDS

# FIG. 3

JOB (1) : PROBLEM (1)+PROBLEM (2)+PROBLEM (3)

TOTAL CALCULATION TIME: ONE SECOND

# FIG. 4

# FIG. 5

BIT

|   | PROBLEM (1) |   |   | PROBLEM (2) |   |   |   |
|---|---|---|---|---|---|---|---|
| 1 | 2 | 3 | 4 | 5 | 6 | 7 | 8 |

BIAS

| 1 | 2 | 3 | 4 | 5 | 6 | 7 | 8 |
|---|---|---|---|---|---|---|---|
|   |   | 0 | 0 |   |   |   |   |

WEIGHT

|   | 1 | 2 | 3 | 4 | 5 | 6 | 7 | 8 |
|---|---|---|---|---|---|---|---|---|
| 1 |   |   | 0 | 0 | 0 | 0 | 0 | 0 |
| 2 |   |   | 0 | 0 | 0 | 0 | 0 | 0 |
| 3 | 0 | 0 | 0 | 0 | 0 | 0 | 0 | 0 |
| 4 | 0 | 0 | 0 | 0 | 0 | 0 | 0 | 0 |
| 5 | 0 | 0 | 0 | 0 |   |   |   |   |
| 6 | 0 | 0 | 0 | 0 |   |   |   |   |
| 7 | 0 | 0 | 0 | 0 |   |   |   |   |
| 8 | 0 | 0 | 0 | 0 |   |   |   |   |

# FIG. 6

PROBLEM (1)    PROBLEM (1)    PROBLEM (2)

BIT

| 1 | 2 | 3 | 4 | 5 | 6 | 7 | 8 |

BIAS

| 1 | 2 | 3 | 4 | 5 | 6 | 7 | 8 |
|---|---|---|---|---|---|---|---|
|   | 0 | 0 |   |   |   |   |   |

WEIGHT

|   | 1 | 2 | 3 | 4 | 5 | 6 | 7 | 8 |
|---|---|---|---|---|---|---|---|---|
| 1 |   | 0 | 0 |   | 0 | 0 | 0 | 0 |
| 2 | 0 | 0 | 0 | 0 | 0 | 0 | 0 | 0 |
| 3 | 0 | 0 | 0 | 0 | 0 | 0 | 0 | 0 |
| 4 |   | 0 | 0 |   | 0 | 0 | 0 | 0 |
| 5 | 0 | 0 | 0 | 0 |   |   |   |   |
| 6 | 0 | 0 | 0 | 0 |   |   |   |   |
| 7 | 0 | 0 | 0 | 0 |   |   |   |   |
| 8 | 0 | 0 | 0 | 0 |   |   |   |   |

# FIG. 7

```
                                              ⌒10
┌──────────────────────────────────────────────┐
│                                                │
│     ⌒11                      ⌒14               │
│  ┌──────────────┐      ┌──────────────┐        │
│  │ CONTROL UNIT │◄────►│ DISPLAY UNIT │        │
│  └──────────────┘      └──────────────┘        │
│     ⌒12                      ⌒15               │
│  ┌──────────────┐      ┌──────────────┐        │
│  │    MEMORY    │◄────►│  INPUT UNIT  │        │
│  └──────────────┘      └──────────────┘        │
│     ⌒13                      ⌒16               │
│  ┌──────────────┐      ┌──────────────┐        │
│  │ STORAGE UNIT │◄────►│ OUTPUT UNIT  │        │
│  │ (HARD DISK)  │      └──────────────┘        │
│  └──────────────┘           ⌒17               │
│                        ┌──────────────┐        │
│                   ◄───►│ I/O INTERFACE│        │
│                        │     UNIT     │        │
│              18        └──────────────┘        │
└──────────────────────────────────────────────┘
```

# FIG. 8

30

14
DISPLAY UNIT

12
MEMORY

15
INPUT UNIT

13
STORAGE UNIT
(HARD DISK)

16
OUTPUT UNIT

17
I/O INTERFACE
UNIT

40

11
CONTROL UNIT

19
NETWORK
INTERFACE UNIT

20
NETWORK
INTERFACE UNIT

18

# FIG. 9

```
              ┌─ 30
┌──────────────────────────────────────────┐
│   ┌─ 11                    ┌─ 14          │
│ ┌────────────┐  │  ┌────────────────┐     │
│ │CONTROL UNIT│◄─┼─►│  DISPLAY UNIT  │     │
│ └────────────┘  │  └────────────────┘     │
```

CONTROL UNIT — 11

DISPLAY UNIT — 14

MEMORY — 12

INPUT UNIT — 15

OUTPUT UNIT — 16

I/O INTERFACE UNIT — 17

NETWORK INTERFACE UNIT — 19

18

STORAGE UNIT (HARD DISK) — 13

NETWORK INTERFACE UNIT — 20

40

# FIG. 10

```
                                                              ⌐10
┌─────────────────────────────────────────────────────────────────┐
│                      OPTIMIZATION DEVICE                          │
│        ⌐101                    ⌐104                    ⌐106        │
│  ┌──────────────┐      ┌──────────────────┐    ┌──────────────┐   │
│  │COMMUNICATION │      │ CONTROL FUNCTION │    │STORAGE FUNCTION│ │
│  │FUNCTION UNIT │──────│      UNIT        │    │     UNIT      │   │
│  └──────────────┘      │          ⌐105    │    │        ⌐107   │   │
│        ⌐102            │  ┌────────────┐  │    │  ┌──────────┐ │   │
│  ┌──────────────┐      │  │SOLUTION UNIT│ │────│  │ BIAS DB  │ │   │
│  │INPUT FUNCTION│──────│  └────────────┘ │    │  └──────────┘ │   │
│  │     UNIT     │      │                  │    │        ⌐108   │   │
│  └──────────────┘      │                  │    │  ┌──────────┐ │   │
│        ⌐103            │                  │    │  │WEIGHT DB │ │   │
│  ┌──────────────┐      │                  │    │  └──────────┘ │   │
│  │OUTPUT FUNCTION│─────│                  │    │              │   │
│  │     UNIT     │      │                  │    │              │   │
│  └──────────────┘      └──────────────────┘    └──────────────┘   │
└─────────────────────────────────────────────────────────────────┘
```

# FIG. 11

START

DEFINE COST FUNCTION IN PLURALITY OF COMBINATORIAL OPTIMIZATION PROBLEMS DEFINED ACCORDING TO CONDITIONS AND RESTRICTIONS OF INDIVIDUAL COMBINATORIAL OPTIMIZATION PROBLEMS ~ S101

CONVERT COST FUNCTION INTO ISING MODEL OF EQUATION (1) ~ S102

PREPARE BITS FOR SOLVING PLURALITY OF COMBINATORIAL OPTIMIZATION PROBLEMS BY ANNEALING MACHINE, ASSIGN BITS TO BE USED FOR SOLVING INDIVIDUAL COMBINATORIAL OPTIMIZATION PROBLEMS BASED ON BIAS AND WEIGHT IN ISING MODEL OF EQUATION (1) ~ S103

SET CALCULATION CONDITION (ANNEALING PARAMETER) CAPABLE OF SOLVING COMBINATORIAL OPTIMIZATION PROBLEM MOST DIFFICULT TO SOLVE AMONG PLURALITY OF COMBINATORIAL OPTIMIZATION PROBLEMS TO BE SOLVED ~ S104

SOLVE PLURALITY OF COMBINATORIAL OPTIMIZATION PROBLEMS BY MINIMIZING EQUATION (1) USING ANNEALING MACHINE ~ S105

OUTPUT RESULT OF SOLVING INDIVIDUAL COMBINATORIAL OPTIMIZATION PROBLEMS BASED ON RESULT OF SOLVING PLURALITY OF COMBINATORIAL OPTIMIZATION PROBLEMS ~ S106

END

# FIG. 12

STATE HOLDING UNIT — 111

STATE S — 112

ENERGY CALCULATION UNIT

CANDIDATE NUMBER {Ni}  ENERGY CHANGE VALUE {−ΔEi}

TRANSITION CONTROL UNIT — 114

TRANSITION ACCEPTANCE f

TRANSITION NUMBER N

TEMPERATURE VALUE T

TEMPERATURE CONTROL UNIT — 113

100

CANDIDATE NUMBER {Ni}

CANDIDATE GENERATION UNIT — 114a

CANDIDATE NUMBER {Ni}

ENERGY CHANGE VALUE {−ΔEi}

TEMPERATURE VALUE T

ACCEPTANCE DETERMINATION UNIT — 114b

CANDIDATE NUMBER {Ni}

TRANSITION ACCEPTANCE {fi}

TRANSITION DETERMINATION UNIT — 114c

TRANSITION NUMBER N

TRANSITION ACCEPTANCE f

RANDOM NUMBER GENERATION UNIT — 114d

# FIG. 13

ENERGY CHANGE VALUE {− △Ei}

114 — TRANSITION CONTROL UNIT

114b1 — RANDOM NUMBER GENERATION CIRCUIT

114b2 — SELECTOR

TRANSITION NUMBER N

114b3 — NOISE TABLE

114b4 — ⊗

TEMPERATURE VALUE T

114b5 — (+ / −) TRANSITION ACCEPTANCE f

# FIG. 14

| | |
|---|---|
| SELECT ONE STATE TRANSITION AS CANDIDATE | S0001 |

↓

| | |
|---|---|
| DETERMINE AVAILABILITY OF STATE TRANSITION BY COMPARING ENERGY CHANGE VALUE FOR STATE TRANSITION WITH PRODUCT OF TEMPERATURE VALUE AND RANDOM NUMBER | S0002 |

↓

| | |
|---|---|
| ADOPT STATE TRANSITION IF AVAILABLE OR REJECT STATE TRANSITION IF UNAVAILABLE | S0003 |

# FIG. 15

| |
|---|
| 9 |
| 7 |
| 9 |
| 6 |
| 8 |
| 0 |
| 0 |
| ... |

# FIG. 16

| |
|---|
| -29612 |
| -50578 |
| 13716 |
| 49683 |
| 12428 |
| -84916 |
| 17546 |
| 76304 |
| -11440 |
| 90854 |
| 62383 |
| 93978 |
| -29253 |
| 60048 |
| 15376 |
| 58126 |
| 58583 |
| 45082 |
| -29753 |
| 96560 |
| 0 |
| 0 |
| … |

# FIG. 17

| |
|---|
| 9 |
| 7 |
| 9 |
| 6 |
| 8 |
| -29612 |
| -50578 |
| 13716 |
| 49683 |
| 12428 |
| -84916 |
| 17546 |
| 76304 |
| -11440 |
| 90854 |
| 62383 |
| 93978 |
| -29253 |
| 60048 |
| 15376 |
| 58126 |
| 58583 |
| 45082 |
| -29753 |
| 96560 |
| 0 |
| … |

# FIG. 18

| 0 | −6 | −6 | −5 | −1 | 0 | 0 | ··· |
|---|----|----|----|----|---|---|-----|
| −6 | 0 | −7 | −5 | −10 | 0 | 0 | ··· |
| −6 | −7 | 0 | −7 | −6 | 0 | 0 | ··· |
| −5 | −5 | −7 | 0 | −6 | 0 | 0 | ··· |
| −1 | −10 | −6 | −6 | 0 | 0 | 0 | ··· |
| 0 | 0 | 0 | 0 | 0 | 0 | 0 | ··· |
| 0 | 0 | 0 | 0 | 0 | 0 | 0 | ··· |
| ⋮ | ⋮ | ⋮ | ⋮ | ⋮ | ⋮ | ⋮ | ··· |

# FIG. 19A

| | | | | | | | | | | |
|---|---|---|---|---|---|---|---|---|---|---|
| 0 | 678 | -21006 | 1545 | -23169 | -13079 | 29745 | 18545 | -2100 | -22767 | |
| 678 | 0 | 31513 | -18263 | 17957 | -9056 | 13913 | -25254 | -8043 | 9520 | |
| -21006 | 31513 | 0 | -10179 | 32250 | -32543 | 30431 | 0 | 13855 | 5442 | |
| 1545 | -18263 | -10179 | 0 | -21371 | -15785 | -9021 | -15374 | 1453 | 11165 | |
| -23169 | 17967 | 32250 | -21371 | 0 | 4054 | -23990 | 30284 | 10415 | -24245 | |
| -13079 | -9056 | -32543 | -15785 | 4054 | 0 | 17997 | 9139 | 12270 | 0 | |
| 29745 | 13913 | 30431 | -9021 | -23990 | 17997 | 0 | -3076 | 11429 | -13567 | |
| 18545 | -25254 | 0 | -15374 | 30284 | 9139 | -3076 | 0 | -9552 | 7497 | |
| -2100 | -8043 | 13855 | 1453 | 10415 | 12270 | 11429 | -9652 | 0 | 255 | |
| -22767 | 9520 | 5422 | 11165 | -24245 | 0 | -13567 | 7497 | 255 | 0 | |
| -15502 | 30318 | 12695 | -1390 | 4820 | -131 | 29965 | 25647 | 20511 | -19236 | |
| 21342 | -25320 | 8174 | 0 | 23481 | 28481 | -11200 | 13411 | -20923 | 4253 | |
| 9326 | 11062 | 15715 | 0 | -9025 | 17134 | -11808 | 12805 | 28119 | -20276 | |
| -32511 | -7094 | 2545 | 0 | 10948 | 2560 | -28156 | -10585 | -6582 | 1443 | |
| 19545 | -32333 | 22530 | 0 | -22808 | -31911 | -3908 | -17695 | 2860 | -19405 | |
| 24975 | -77 | 5735 | 0 | 0 | 0 | 0 | 0 | 0 | -7023 | |
| 3214 | 18825 | 31947 | 0 | 17787 | -25787 | -14744 | 18110 | -21330 | -10215 | |
| 18092 | -11314 | 23720 | 0 | 32028 | -12948 | 22478 | -3657 | -19593 | -12082 | |
| -17182 | 3276 | -14010 | -24219 | 20724 | 26034 | 3435 | -8394 | -23785 | -23954 | |
| -935 | -29528 | 25465 | 15837 | 21881 | 29098 | 0 | 15351 | 16666 | -27424 | |
| 0 | 0 | 0 | 0 | 0 | 0 | 0 | 0 | 0 | 0 | |
| ... | ... | ... | ... | ... | ... | ... | ... | ... | ... | |

# FIG. 19B

| | | | | | | | | | | |
|---|---|---|---|---|---|---|---|---|---|---|
| -15502 | 21342 | 9328 | -32511 | 19646 | 24975 | 3214 | 18092 | -17182 | -935 | ... |
| 30318 | -25320 | 11062 | -7094 | -32333 | -77 | 18825 | -11314 | 3276 | -29628 | ... |
| 12695 | 8174 | 15715 | 2545 | 22530 | 5735 | 31947 | 23720 | -14010 | 25465 | ... |
| -1390 | 0 | 0 | 0 | 0 | 0 | 0 | 0 | -24219 | 15837 | ... |
| 4820 | 23481 | -9025 | 10948 | -22808 | 0 | 17787 | 32028 | 20724 | 21881 | ... |
| -131 | 28481 | 17134 | 2560 | -31911 | 0 | -25787 | -12948 | 26034 | 29098 | ... |
| 29965 | -11200 | -11808 | -28156 | -3908 | 0 | -14744 | 22478 | 3435 | 0 | ... |
| 25647 | 13411 | 12806 | -10585 | -17695 | 0 | 18110 | -3657 | -8394 | 15351 | ... |
| 20611 | -20923 | 28119 | -6582 | 24860 | 0 | -21330 | -19593 | -23786 | 16666 | ... |
| -19236 | 4253 | -20276 | 1443 | -19405 | -7023 | -10215 | -12082 | -23954 | -27424 | ... |
| 0 | -11807 | -29831 | 16038 | 30570 | -16032 | -32736 | 28952 | 0 | 19580 | ... |
| -11807 | 0 | 7609 | -3723 | 21445 | 27939 | 19929 | -32762 | -2582 | 4656 | ... |
| -29831 | 7609 | 0 | 27258 | -23756 | 0 | 0 | 4381 | 2241 | 5618 | ... |
| 16038 | -3723 | 27258 | 0 | -10815 | -11249 | 8994 | 25256 | -20318 | 22574 | ... |
| 30570 | 21445 | -23756 | -10815 | 0 | 18940 | -7761 | 28425 | -1223 | 16778 | ... |
| -16032 | 27939 | 0 | -11249 | 18940 | 0 | -3819 | -21999 | 31972 | -944 | ... |
| -32736 | 19929 | 0 | 8994 | -7761 | -3819 | 0 | -29238 | 5224 | 23292 | ... |
| 28952 | -32762 | 4381 | 25256 | 28426 | -21999 | -29238 | 0 | 5362 | -18354 | ... |
| 0 | -2582 | 2241 | -20318 | -1223 | 31972 | 5224 | 6352 | 0 | 11 | ... |
| 19580 | 4656 | 5618 | 22574 | 16778 | -944 | 23292 | -18354 | 11 | 0 | ... |
| 0 | 0 | 0 | 0 | 0 | 0 | 0 | 0 | 0 | 0 | ... |
| ... | ... | ... | ... | ... | ... | ... | ... | ... | ... | ... |

## FIG. 20A

| | | | | | | | | | | | | |
|---|---|---|---|---|---|---|---|---|---|---|---|---|
| 0 | -6 | -6 | -1 | 0 | 0 | 0 | 0 | 0 | 0 | 0 | 0 | 0 |
| -6 | 0 | -7 | -10 | 0 | 0 | 0 | 0 | 0 | 0 | 0 | 0 | 0 |
| -6 | -7 | 0 | -6 | 0 | 0 | 0 | 0 | 0 | 0 | 0 | 0 | 0 |
| -5 | -5 | -7 | -6 | 0 | 0 | 0 | 0 | 0 | 0 | 0 | 0 | 0 |
| -1 | -10 | -6 | 0 | 0 | 0 | 0 | 0 | 0 | 0 | 0 | 0 | 0 |
| 0 | 0 | 0 | 0 | 0 | 678 | -21006 | 1545 | -23169 | -13079 | 29745 | 18545 | -2100 |
| 0 | 0 | 0 | 0 | 678 | 0 | 31513 | -18263 | 17967 | -9056 | 13913 | -25254 | -8043 |
| 0 | 0 | 0 | 0 | -21006 | 31513 | 0 | -10179 | 32250 | -32543 | 30431 | 0 | 13855 |
| 0 | 0 | 0 | 0 | 1545 | -18263 | -10179 | 0 | -21371 | -15785 | -9021 | -9021 | 1453 |
| 0 | 0 | 0 | 0 | -23169 | 17967 | 32250 | -21371 | 0 | 4054 | -23990 | -15374 | 10415 |
| 0 | 0 | 0 | 0 | -13079 | -9056 | -32543 | -15785 | 4054 | 0 | 17997 | 9139 | 12270 |
| 0 | 0 | 0 | 0 | 29745 | 13913 | 30431 | -9021 | -23990 | 17997 | 0 | -3076 | 11429 |
| 0 | 0 | 0 | 0 | 18545 | -25254 | 0 | -15374 | 30284 | 9139 | -3076 | 0 | -9652 |
| 0 | 0 | 0 | 0 | -2100 | -8043 | 13855 | 1453 | 10415 | 12270 | 11429 | -9652 | 0 |
| 0 | 0 | 0 | 0 | -22767 | 9520 | 5442 | 11165 | -24245 | 0 | -13567 | 7497 | 255 |
| 0 | 0 | 0 | 0 | -15502 | 30318 | 12695 | -1390 | 4820 | -131 | 29965 | 25647 | 20611 |
| 0 | 0 | 0 | 0 | 21342 | -25320 | 8174 | 0 | 23481 | 28481 | -11200 | 13411 | -20923 |
| 0 | 0 | 0 | 0 | 9328 | 11062 | 15715 | 0 | -9025 | 17134 | -11808 | 12806 | 28119 |
| 0 | 0 | 0 | 0 | -32511 | -7094 | 2545 | 0 | 10948 | 2560 | -28156 | -10585 | -6582 |
| 0 | 0 | 0 | 0 | 19646 | -32333 | 22530 | 0 | -22808 | -31911 | -3908 | -17696 | 24860 |
| 0 | 0 | 0 | 0 | 24975 | -77 | 5735 | 0 | 0 | 0 | 0 | 0 | 0 |
| 0 | 0 | 0 | 0 | 3214 | 18825 | 31947 | 0 | 17787 | -25787 | -14744 | 18110 | -21330 |
| 0 | 0 | 0 | 0 | 18092 | -11314 | 23720 | 0 | 32028 | -12948 | 22478 | -3657 | -19593 |
| 0 | 0 | 0 | 0 | -17182 | 3276 | -14010 | -24219 | 20724 | 26034 | 3435 | -8394 | -23786 |
| 0 | 0 | 0 | 0 | -935 | -29628 | 15465 | 15837 | 21881 | 29098 | 0 | 15351 | 16666 |
| 0 | 0 | 0 | 0 | 0 | 0 | 0 | 0 | 0 | 0 | 0 | 0 | 0 |
| ... | ... | ... | ... | ... | ... | ... | ... | ... | ... | ... | ... | ... |

## FIG. 20B

| | | | | | | | | | | | | |
|---|---|---|---|---|---|---|---|---|---|---|---|---|
| 0 | 0 | 0 | 0 | 0 | 0 | 0 | 0 | 0 | 0 | 0 | 0 | ... |
| 0 | 0 | 0 | 0 | 0 | 0 | 0 | 0 | 0 | 0 | 0 | 0 | ... |
| 0 | 0 | 0 | 0 | 0 | 0 | 0 | 0 | 0 | 0 | 0 | 0 | ... |
| 0 | 0 | 0 | 0 | 0 | 0 | 0 | 0 | 0 | 0 | 0 | 0 | ... |
| 0 | 0 | 0 | 0 | 0 | 0 | 0 | 0 | 0 | 0 | 0 | 0 | ... |
| -22767 | -15502 | 21342 | 9328 | -32511 | 19646 | 24975 | 3214 | 18092 | -17182 | -935 | 0 | ... |
| 9520 | 30318 | -25320 | 11062 | -7094 | -32333 | -77 | 18825 | -11314 | 3276 | -29628 | 0 | ... |
| 5442 | 12695 | 8174 | 15715 | 2545 | 22530 | 5735 | 31947 | 23720 | -14010 | 25465 | 0 | ... |
| 11165 | -1390 | 0 | 0 | 0 | 0 | 0 | 0 | 0 | -24219 | 15837 | 0 | ... |
| -24245 | 42820 | 23481 | -9025 | 10948 | -22808 | 0 | 17787 | 32028 | 20724 | 21881 | 0 | ... |
| 0 | -131 | 28481 | 17134 | 2560 | -31911 | 0 | -25787 | -12948 | 26034 | 29098 | 0 | ... |
| -13567 | 29965 | -11200 | -11808 | -28156 | -3908 | 0 | -14744 | 22478 | 3435 | 0 | 0 | ... |
| 7497 | 25647 | 13411 | 12806 | -10585 | -17696 | 0 | 18110 | -3657 | -8394 | 15351 | 0 | ... |
| 255 | 20611 | -20923 | 28119 | -6582 | 24860 | 0 | -21330 | -19593 | -23786 | 16666 | 0 | ... |
| 0 | -19236 | 4253 | -20276 | 1443 | -19405 | -7023 | -10215 | -12082 | -23964 | -27424 | 0 | ... |
| -19236 | 0 | -11807 | -29831 | 16038 | 30570 | -16032 | -32736 | 28952 | 0 | 19580 | 0 | ... |
| 4253 | -11807 | 0 | 7609 | -3723 | 21445 | 27939 | 19929 | -32762 | -2582 | 4656 | 0 | ... |
| -20276 | -299831 | 7609 | 0 | 27258 | -23756 | 0 | 0 | 4381 | 2241 | 5618 | 0 | ... |
| 1443 | 16038 | -3723 | 27258 | 0 | -10815 | -11249 | 8994 | 25256 | -20318 | 22574 | 0 | ... |
| -19405 | 30570 | 21445 | -23756 | -10815 | 0 | 18940 | -7761 | 28426 | -1223 | 16778 | 0 | ... |
| -7023 | -16032 | 27939 | 0 | -11249 | 18940 | 0 | -3819 | -21999 | 31972 | -944 | 0 | ... |
| -10215 | -32736 | 19929 | 0 | 8994 | -7761 | -3819 | 0 | -29238 | 5224 | 23292 | 0 | ... |
| -12082 | 28952 | -32762 | 4381 | 25256 | 28426 | -21999 | -29238 | 0 | 6362 | -18354 | 0 | ... |
| -23964 | 0 | -2582 | 2241 | -20318 | -1223 | 31972 | 5224 | 6362 | 0 | 11 | 0 | ... |
| -27424 | 19580 | 4656 | 5618 | 22574 | 16778 | -944 | 23292 | -18354 | 11 | 0 | 0 | ... |
| 0 | 0 | 0 | 0 | 0 | 0 | 0 | 0 | 0 | 0 | 0 | 0 | ... |
| ... | ... | ... | ... | ... | ... | ... | ... | ... | ... | ... | ... | ... |

# FIG. 21

EMBODIMENT 1

JOB (1) : PROBLEM (A1)+PROBLEM (A2)

BIAS  (A1) (A2)

WEIGHT  (A1) 0 / 0 (A2)

$E_{min}$=-1081523

t=0.9 [S]

COMPARATIVE EXAMPLE 1

JOB (1) : PROBLEM (A1)

BIAS  (A1)

WEIGHT  (A1)

$E_{min1}$=-16

$t_1$=0.9 [S]

JOB (2) : PROBLEM (A2)

BIAS  (A2)

WEIGHT  (A2)

$E_{min2}$=-1081507

$t_2$=0.9 [S]

$E_{min1}$+$E_{min2}$=-1081523

$t_1$+$t_2$=1.8 [S]

# FIG. 22

MOLECULE A: ACETIC ACID

MOLECULE B: METHYL ACETATE

# FIG. 23

MOLECULE A

MOLECULE B

| COMBINATION OF VERTICES OF CARBON | | |
|---|---|---|
| A1B1 | A1B2 | A1B4 |
| A2B1 | A2B2 | A2B4 |

| COMBINATION OF VERTICES OF OXYGEN | |
|---|---|
| A3B3 | A3B5 |
| A5B3 | A5B5 |

# FIG. 24

A1-A2 (C-C)
B2-B4 (NO BOND)
BOND STATES ARE DIFFERENT
BETWEEN A AND B

A1-A2 (C-C)
B1-B2 (C-C)
BOND STATES OF A AND B ARE SAME

MOLECULE A

A1 — A2 — A3
A2 — A5

MOLECULE B

B1 — B2 — B3 — B4
B2 — B5

A1B2

A1B1

A1B4

A2B1

A1B2

A2B4

A3B3

A3B5

A5B3

A5B5

# FIG. 25

MOLECULE A

MOLECULE B

# FIG. 26

SIZE : 3    SIZE : 3    SIZE : 3

SIZE : 2    SIZE : 2    ...

# FIG. 27

MOLECULE STRUCTURE | GRAPH | CONFLICT GRAPH

# FIG. 28

SIZE : 3

# FIG. 29

SIZE : 3

# FIG. 30

# FIG. 31

PROBLEM (B1)+PROBLEM (B2)

# FIG. 32

PROBLEM (B1)

BIAS (B1)

WEIGHT (B1)

PROBLEM (B2)

BIAS (B2)

WEIGHT (B2)

# FIG. 33

EMBODIMENT 2

JOB (1) : PROBLEM (B1)+PROBLEM (B2)

BIAS    (B1)  (B2)

WEIGHT

(B1)    0

0    (B2)

$E_{min}$=-20070

t=0.9 [S]

COMPARATIVE EXAMPLE 2

JOB (1) : PROBLEM (B1)

BIAS    (B1)

WEIGHT    (B1)

$E_{min1}$=-200000

$t_1$=0.9 [S]

JOB (2) : PROBLEM (B2)

BIAS    (B2)

WEIGHT    (B2)

$E_{min2}$=-70

$t_2$=0.9 [S]

$E_{min1}$+$E_{min2}$=-20070

$t_1$+$t_2$=1.8 [S]

# FIG. 34

BIAS

| (B1) | (B2) |

WEIGHT

| (B1) | 0 |
| 0 | (B2) |

BIT STATE PROVIDING MINIMUM VALUE
TO ISING MODEL

| 0 | 1 | ⋯ | 1 | 1 | 0 | 1 | ⋯ | 0 |

# FIG. 35

PROBLEM (C1)+PROBLEM (C2)

# FIG. 36

PROBLEM (C1)

BIAS (C1)

WEIGHT (C1)

PROBLEM (C2)

BIAS (C2)

WEIGHT (C2)

# FIG. 37

EMBODIMENT 3

JOB (1) : PROBLEM (C1)+PROBLEM (C2)

BIAS (C1) (C2)

WEIGHT

(C1) 0

0 (C2)

$E_{min}=-1910$

$t=8.4 [S]$

COMPARATIVE EXAMPLE 3

JOB (1) : PROBLEM (C1)

BIAS (C1)

WEIGHT (C1)

$E_{min1}=-1192$

$t_1=8.4 [S]$

JOB (2) : PROBLEM (C2)

BIAS (C2)

WEIGHT (C2)

$E_{min2}=-718$

$t_2=8.4 [S]$

$E_{min1}+E_{min2}=-1910$

$t_1+t_2=16.8 [S]$

# FIG. 38

PROBLEM (C1)+PROBLEM (A2)+PROBLEM (B2)

| BIAS | | | |
|---|---|---|---|
| | (C1) | (A2) | (B2) |

| WEIGHT | (C1) | 0 | 0 |
|---|---|---|---|
| | 0 | (A2) | 0 |
| | 0 | 0 | (B2) |

# FIG. 39

PROBLEM (C1)

BIAS (C1)

WEIGHT (C1)

PROBLEM (A2)

BIAS (A2)

WEIGHT (A2)

PROBLEM (B2)

BIAS (B2)

WEIGHT (B2)

FIG. 40

# FIG. 41

CONVENTIONAL TECHNOLOGY

EMBODIMENT OF PRESENT CASE

Europäisches
Patentamt

European
Patent Office

Office européen
des brevets

# EUROPEAN SEARCH REPORT

Application Number

EP 20 21 7962

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MAHFOUD S W ET AL: "Parallel recombinative simulated annealing: A genetic algorithm", PARALLEL COMPUTING, ELSEVIER, AMSTERDAM, NL, vol. 21, no. 1, 1 January 1995 (1995-01-01), pages 1-28, XP004014093, ISSN: 0167-8191, DOI: 10.1016/0167-8191(94)00071-H * sections 4, 5, 6, 7 * | 1-15 | INV. G06F7/38 G06F7/544 |
| A | BASU S K ET AL: "A naive genetic approach for non-stationary constrained problems", SOFT COMPUTING ; A FUSION OF FOUNDATIONS, METHODOLOGIES AND APPLICATIONS, SPRINGER, BERLIN, DE, vol. 10, no. 2, 1 January 2006 (2006-01-01), pages 152-162, XP019348652, ISSN: 1433-7479, DOI: 10.1007/S00500-004-0438-8 * section 1, 2 * | 1-15 | |
| A | US 2015/278408 A1 (YOSHIMURA CHIHIRO [JP] ET AL) 1 October 2015 (2015-10-01) * paragraph [0095] - paragraph [0104] * * paragraph [0181] - paragraph [0183] * | 1-15 | |

TECHNICAL FIELDS
SEARCHED (IPC)

G06F

The present search report has been drawn up for all claims

| Place of search | Date of completion of the search | Examiner |
|---|---|---|
| Munich | 2 June 2021 | Tenbieg, Christoph |

# EP 3 862 870 A1

## ANNEX TO THE EUROPEAN SEARCH REPORT
## ON EUROPEAN PATENT APPLICATION NO.

EP 20 21 7962

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2021

| Patent document cited in search report | Publication date | Patent family member(s) | Publication date |
|---|---|---|---|
| US 2015278408 A1 | 01-10-2015 | JP 6445246 B2<br>JP 2015191340 A<br>US 2015278408 A1 | 26-12-2018<br>02-11-2015<br>01-10-2015 |

EPO FORM P0459

For more details about this annex : see Official Journal of the European Patent Office, No. 12/82

75

**EP 3 862 870 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019121137 A